# EUROPEAN PATENT SPECIFICATION

(11) **EP 2 168 757 B1**
(45) Date of publication and mention of the grant of the patent: **29.04.2015**
(21) Application number: 08791321.6
(22) Date of filing: 18.07.2008
(51) Int. Cl.: B29C 71/02, B29D 11/00, G02B 1/10, G02B 5/23, G02C 7/10, B29L 11/00, B29C 71/00

(54) **METHOD OF MANUFACTURING A PLASTIC LENS**
VERFAHREN ZUR HERSTELLUNG EINER KUNSTSTOFFLINSE
PROCÉDÉ POUR PRODUIRE UNE LENTILLE EN MATIÈRE PLASTIQUE

(30) Priority: 25.07.2007 JP 2007192920; 31.08.2007 JP 2007226833; 31.08.2007 JP 2007226892
(43) Date of publication of application: 31.03.2010
(73) Proprietor: Hoya Corporation, Tokyo 161-8525 (JP)
(72) Inventor: YAJIMA, Eiichi, Tokyo 161-8525 (JP); MIKAMI, Kazunori, Tokyo 161-8525 (JP); HIROSE, Takamitsu, Tokyo 161-8525 (JP); IMIZU, Takeshi, Tokyo 161-8525 (JP); KUROYAMA, Eisaku, Tokyo 161-8525 (JP); TAKIZAWA, Shigeru, Tokyo 161-8525 (JP)
(74) Representative: Beckmann, Claus
(86) International application number: PCT/JP2008/063012
(87) International publication number: WO 2009/014086

(56) References cited:
- GB-A- 2 082 107
- JP-A- 08 309 872
- JP-A- H07 108 622
- JP-A- 2004 262 141
- JP-A- 2004 262 141
- JP-A- 2005 199 683
- JP-A- 2005 199 683
- JP-A- 2006 221 144
- JP-A- 2006 221 144
- JP-B2- 2 783 499
- JP-B2- 2 909 573
- JP-B2- 3 428 062

## Description

### TECHNICAL FIELD

The present invention relates to a method of manufacturing a plastic lens according to claim 1 comprising a functional film such as a photochromic on a substrate.

### BACKGROUND TECHNIQUE

In the process of manufacturing plastic lenses employed as optical lenses such as eyeglasses, a heat treatment is generally conducted at a temperature greater than or equal to the glass transition temperature of the lens substrate to remove distortion within the lens. For example, Japanese Unexamined Patent Publication (KOKAI) No. 2004-262141 describes conducting a heat treatment at a temperature greater than or equal to the glass transition temperature of the substrate after coating a hard coat to the plastic lens substrate. Another example is given in GB 2 082 107.

However, since the fluidity of plastic increases at greater than or equal to the glass transition temperature, deformation of the substrate sometimes decreases adhesion between the coating film and the substrate when heated to greater than or equal to the glass transition temperature of the substrate after forming a coating film by the method as described in Japanese Unexamined Patent Publication (KOKAI) No. 2004-262141 when the coating film is rigid. So long as the coating film has suitable fluidity in the vicinity of the interface with the substrate, it will track deformation of the substrate, ensuring adhesion. In that case, however, it becomes difficult to control the surface dioptric power of the lens because the shape of the lens surface changes greatly from design parameters. Accordingly, the temperature of the heat treatment could conceivably be set lower than the glass transition temperature of the lens substrate, but when that is done, it becomes difficult to effectively eliminate distortion within the lens substrate.

### DISCLOSURE OF THE INVENTION

Accordingly, it is an object of the present invention to provide a plastic lens achieving both adhesion between the coating film and the substrate and optical characteristics.

The present inventors conducted extensive research into achieving the above object, resulting in the following discovery.

To prevent a decrease in adhesion due to deformation of the lens substrate and facilitate control of the surface dioptric power of the lens, it is conceivably possible to heat treat the lens substrate at a temperature at or above the glass transition temperature prior to coating the coating film, thereby removing distortion within the substrate in advance. However, when that was done, the following new problems were encountered.

Conventionally, distortion within the lens substrate has been considered to be a problem. The thicker the coating film, the more distortion within the coating film affects the optical characteristics of the lens as a whole. In particular, since photopolymerization progresses more rapidly than polymerization by heating, distortion has a greater tendency to remain within the coating film. In methods of heat treating the entire lens to remove distortion within the substrate and cure the coating liquid after a coating film has been formed, the heat treatment can also remove distortion within the coating film. However, when the heat treatment to remove distortion within the lens substrate is completed before forming the coating film and photopolymerization is conducted to cure the coating liquid, distortion within the coating film cannot be removed because the coating liquid that has been applied to the substrate is normally not exposed to heat.

Thus, it is extremely difficult to achieve both adhesion between the coating film and the substrate and optical characteristics (control the surface refractive index and remove distortion).

Accordingly, the present inventors conducted further research, resulting in the discovery that the above problem was solved by first heating the lens substrate to a temperature at or above the glass transition temperature prior to coating the coating film, forming the coating film by photopolymerization, and then heat treating the entire lens at a temperature at or above the glass transition temperature of the coating film but lower than the glass transition temperature of the glass substrate.

The present invention was devised on the basis of the above discovery.

The present invention relates to a method of manufacturing a plastic lens comprising a cured film on at least one of a pair of opposing surfaces of a plastic lens substrate comprising:
heating the plastic lens substrate to a temperature greater than or equal to a glass transition temperature of the substrate;
coating a photocurable composition on at least one of a pair of opposing surfaces of the lens substrate following the heating;
forming a cured film by irradiating the photocurable composition that has been coated on the substrate with light to cure at least a portion of the composition; and
conducting a heat treatment of the plastic lens on which the cured film has been formed at a temperature, the temperature being lower than the glass transition temperature of the substrate but greater than or equal to a glass transition temperature of the cured film.

According to one embodiment, the photocurable composition may be a photochromic liquid comprising a photochromic dye and a photocurable component.

According to one embodiment, the photocurable composition may further comprise a photo-induced radical polymerization initiator.

According to one embodiment, the cured film may have a thickness ranging from 10 to 60 µm.

According to one embodiment, the heating of the plastic lens substrate and/or the heat treatment may be conducted while supporting, with a support member, an edge surface of the plastic lens substrate positioned with one of the opposing surfaces facing downward.

According to one embodiment, the edge surface of the plastic lens substrate may comprise a tapered surface with a reverse-tapered shape with respect to the surface positioned facing downward.

According to one embodiment, the tapered surface may form a part of a lateral surface of a cone sharing a common vertex.

According to one embodiment, the supporting may be conducted in a state where the surface positioned facing downward does not contact the support member.

According to one embodiment, among the pair of opposing surfaces, one may be an optical surface and the other may be a non-optical surface, and the surface positioned facing downward may be the optical surface.

According to one embodiment, the surface positioned facing downward may comprise a progressive surface or an aspherical surface comprising a progressive element.

According to one embodiment, among the pair of opposing surfaces, one may be a convex surface and the other may be a concave surface, and the surface positioned facing downward may be the convex surface.

According to one embodiment, both of the pair of opposing surfaces may have a noncentrosymmetric surface shape.

According to one embodiment, the support member may be a ring-shaped member having on its inner circumference a surface into which the edge surface of the plastic lens fits, and the supporting may be conducted by fitting the edge surface of the plastic lens into the surface.

According to one embodiment, the supporting may be conducted in the heat treatment, and the surface on which the cured film is comprised may be positioned facing downward during the supporting.

According to one embodiment, the photocurable composition may comprise a coupling agent.

According to one embodiment, prior to coating of the photocurable composition, a surface of the plastic lens substrate to be coated with the composition may be subjected to at least one surface treatment selected from the group consisting of a surface cleaning treatment, a surface activation treatment, a surface area increasing treatment, and a surface coating application treatment.

According to one embodiment, the surface treatment may comprise at least one selected from the group consisting of alkali treatment, polishing treatment, exposure to ozone, corona discharge, irradiation with ultraviolet radiation, plasma discharge, coating of a primer layer, and solvent treatment.

The present invention can yield a high-quality plastic lens that achieves both adhesion between the lens substrate and the coating film, and optical characteristics.

### BEST MODE FOR CARRYING OUT THE INVENTION

The present invention relates to a method of manufacturing a plastic lens comprising a cured film on at least one of a pair of opposing surfaces of a plastic lens substrate. The method of manufacturing a plastic lens of the present invention (also referred to as "Aspect I", hereinafter) comprises the following steps.

### (First step)

Heating the plastic lens substrate to a temperature greater than or equal to a glass transition temperature of the substrate.

### (Second step)

Coating a photocurable composition on at least one of a pair of opposing surfaces of the lens substrate following the heating.

### (Third step)

Forming a cured film by irradiating the photocurable composition that has been coated on the substrate with light to cure at least a portion of the composition.

### (Fourth step)

Conducting a heat treatment of the plastic lens on which the cured film has been formed at a temperature, the temperature being lower than the glass transition temperature of the substrate but greater than or equal to a glass transition temperature of the cured film.

Each of the above steps will be sequentially described in detail below.

### First step (first heaving step)

This step is a step in which the lens substrate prior to forming a coating film is heated to a temperature greater than or equal to the glass transition temperature of the substrate. Heating to or above the glass transition temperature of the substrate can effectively remove distortion within the substrate.

The various materials commonly employed as plastic lens materials can be employed as the plastic material constituting the plastic lens substrate. Examples of the plastic lens material are: copolymers of methyl methacrylate and one or more other monomers, copolymers of diethylene glycol bisallyl carbonate and one or more other monomers, copolymers of polyurethane and polyurea, polycarbonate, polystyrene, polyvinyl chloride, unsaturated polyester, polyethylene terephthalate, polyurethane, polythiourethane, sulfide resins employing ene-thiol reactions, and sulfur-containing vinyl polymers. Of these, due to the great change in the elastic modulus of polyurethane near the glass transition temperature Tg, when heat treating the entire lens to or above the glass transition temperature of polyurethane after forming the coating film, deformation of the substrate may reduce adhesion and make it difficult to control the surface dioptric power. However, in the present invention, since heat treatment of the entire lens after forming the coating film is conducted at a temperature lower than the Tg of the substrate, the above problems due to deformation of the substrate can be avoided. Thus, the present invention is suited to application to polyurethane lenses. Polyurethane lenses can be obtained by polymerizing, for example, a polyisocyanate and a polyol, and/or a polythiol. Depending on the objective, it is also possible to add a third component to the above polyurethane materials. For specifics on polyurethane, reference can be made to Japanese Unexamined Patent Publication (KOKAI) Showa No. 63-46213, Japanese Unexamined Patent Publication (KOKAI) Heisei No. 3-284715, or the like. Plastic lenses can be molded by known methods such as casting polymerization and injection molding. The thickness of a plastic lens is generally about 1 mm to 50 mm at the geometric center thereof.

Regarding the glass transition temperature of the substrate and the glass transition temperature of the coating film (cured film), described further below, the glass transition temperature of samples for measuring glass transition temperatures are desirably measured ahead of time in preliminary testing to determine manufacturing conditions. For example, although the glass transition temperature of a polyurethane lens will vary depending on whether or not a third component is present and the quantity in which such a component is added, it is generally about 100 to 120°C.

In the present invention, the glass transition temperature refers to a value that is measured for a lens substrate with a thermomechanical analyzer (TMA) in penetration mode. Additionally, the glass transition temperature of a cured film refers to the temperature at which the ratio E'/E" (tan δ) of the storage modulus of elasticity E' to the loss modulus of elasticity E", which are obtained by dynamic viscoelasticity measurement, peaks.

The lens substrate is desirably heated by a method where the edge surface of the lens substrate is supported by a support member in the course of positioning the substrate on a support member so that one of the pair of opposing surfaces of the lens substrate faces downward, particularly when the surface of the lens has a noncentrosymmetric shape. In that case, the edge surface of the plastic lens that is being supported by the support member is shaped to comprise a tapered surface with a reverse-tapered shape with respect to the surface that is positioned facing downward. Designing the edge surface to comprise a reverse-tapered shape with respect to the surface (also referred to as the "lower lens surface" or "lower surface" hereinafter) that is positioned facing downward on the support member in this manner makes it possible to support the lens by its edge surface during the heat treatment. In a conventional heat treatment, part of the lower lens surface (such as the rim edge portion) is brought into contact with a lens-carrying base to support the lens during the process. However, in the above method, to stably support the lens, the lower lens surface must be designed to have a center-symmetric shape such as a spherical surface shape, or with a shape such that the rim edge portions form a circle within a single plane. Further, conventionally, the lens edge surface is part of a cylindrical lateral surface, so mounting that exploits gravity is impossible. Thus, to support a lens of such shape by its edge surface requires that the edge surface be gripped with a certain pressure. However, since this necessarily subjects the lens to stress, the lens tends to deform in the direction of the stress, making it hard to regulate its shape. By contrast, the lens edge surface shaped to comprise a tapered surface with a reverse-tapered shape with respect to the lower surface in this manner permits support through the edge surface.

The heating method will be described in greater detail below.

When heat treating the lens substrate by the above method, the edge surface of the substrate is designed to comprise a tapered surface with a reverse-tapered shape with respect to the surface that is positioned facing downward during the heat treatment. Such a plastic lens substrate can be obtained, for example, by taper processing the edge surface after processing the shape of the lens by a known molding method such as casting polymerization or injection molding of plastic. This taper processing can be conducted with a grinder, for example. Further, a lens of the above shape can be obtained without taper processing following molding by employing a mold that is capable of forming lenses with a tapered edge surface. For example, a mold with a relation of Ma < Mb (where Ma denotes the outer diameter of the mold on the convex surface side and Mb denotes the outer diameter of the mold on the concave surface side) can be prepared, and a lens casting mold can be assembled with a resin gasket. The shape of the taper of the edge surface can be controlled by controlling Ma and Mb. Mb-Ma is suitably 0.1 to 0.5 mm. It is also suitable to form a taper structure on the edge surface of the lens by preforming a taper structure in a resin gasket.

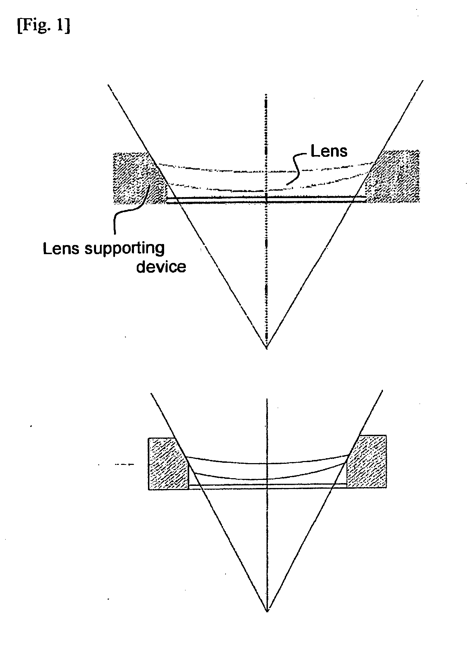

Fig. 1 shows an example of how the plastic lens thus obtained is mounted on a support member.

The shape of the lens will be described in greater detail below based on Fig. 1.

The lens shown in Fig. 1 is a meniscus lens one surface of which is convex and the other surface of which is concave. However, the shape of the lens substrate in the present invention is not limited to that of a meniscus lens; the shape may also be that of a biconvex lens, biconcave lens, or a lens having one surface which is convex or concave, and another surface which is flat. Fig. 1 shows an example of mounting where the convex surface of the lens is positioned facing downward; however, it is also suitable to mount the convex surface facing upward in the present invention.

In the above support method, the lens substrate, as shown in Fig. 1 for example, is positioned with one of its opposing surfaces facing downward. The lower lens surface that is positioned facing downward during the heat treatment does not run the risk of adhesion of foreign matter in the form of foreign matter or the like dropping from the inner walls of the heating furnace. Thus, a surface on which the adhesion of foreign matter is to be prevented is desirably positioned facing downward. For example, in a semifinished lens, one of the surfaces is an optical surface and the other surface is a non-optical surface. Following acceptance of order, the non-optical surface is subjected to grinding and polishing processing to provide a lens product. With such a semifinished lens, positioning the optical surface so that it faces downward can prevent the optical surface from being contaminated by foreign matter during the heat treatment. With a meniscus lens, if the concave surface is positioned facing upward and an object larger than the lens drops from above, the falling object will initially come into contact with the edge portion, thereby preventing the center portion of the concave surface from being damaged by the falling object. Conversely, if the convex surface is positioned facing upward and an object drops from above, the center portion of the lens will end up being damaged. If the portion that is damaged in this manner is the edge portion, the damaged portion can be readily removed by grinding or the like. However, when the center portion is damaged, it becomes difficult to ship it as a finished product. Thus, particularly for a meniscus lens in the form of a finished lens both surfaces of which are optical surfaces, it is desirable to position the convex surface facing downward.

In the lens that is manufactured by the present invention, both surfaces may have centrosymmetry (for example, they may be two spherical surfaces), either one of the two may have a surface shape that is noncentrosymmetric, or both of the two surfaces may have shapes that are noncentrosymmetric. Particularly in the case of the above support method, since the edge surface of a lens having two surfaces with surface shapes that are not noncentrosymmetric can be supported by the support member to stably hold the lens and conduct the heat treatment, the above support method is suitably applied to such lenses. Examples of such lenses are double-asymmetric-surface progressive dioptric power lenses having progressive elements on both surfaces, progressive dioptric power lenses having one progressive surface and one toric surface, monofocal lenses with a toric component distributed between two surfaces, and eyeglass lenses that have been processed so that the optical center of a monofocal lens (including the far measurement position of a progressive dioptric power lens) is rendered eccentric relative to the geometric center of a round lens. These lenses are difficult to stably support by conventional methods where the lower surface is supported by placing it in contact with the carrying base. By contrast, stable support is possible regardless of surface shape by the above support method because the edge surface is supported. Thus, since it is unnecessary for one of the surfaces to be centrosymmetric when designing a lens, freedom to design surface shapes can be achieved and desired optical properties can be imparted to both lens surfaces.

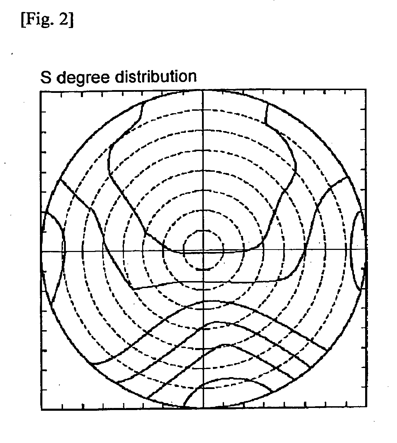

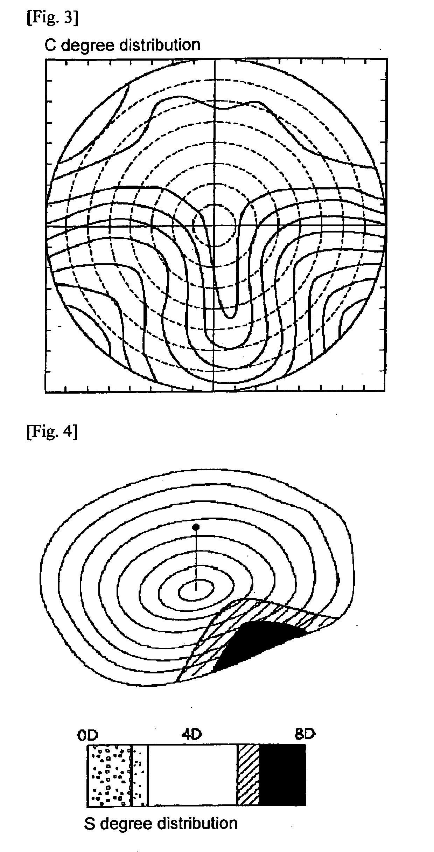

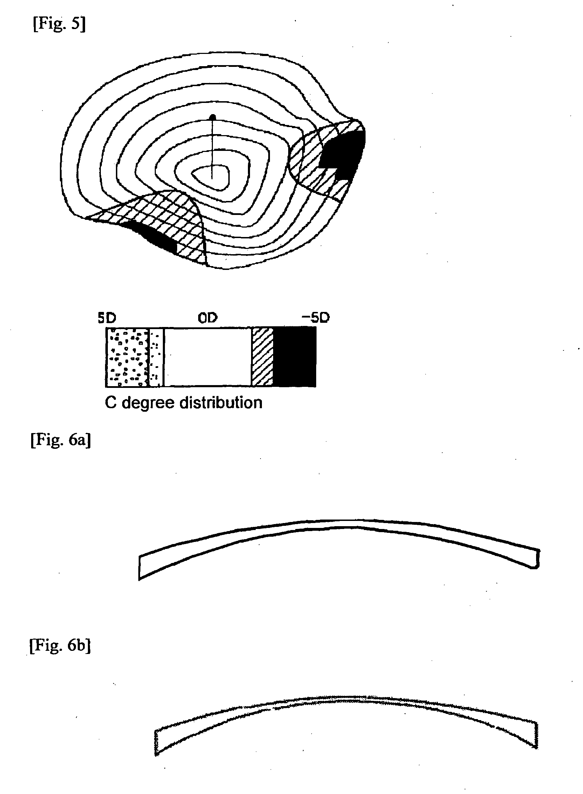

A progressive dioptric power lens is a lens that is employed as a progressive dioptric power lens for presbyopia. While being employed in presbyopic eyeglasses, progressive dioptric power lenses afford the advantage of not being readily identifiable as presbyopic eyeglasses based on exterior appearance and the advantage of providing continuously clear, unbroken vision from far to near. They are thus widely employed in general. However, without introducing boundary lines into the limited lens area, multiple visual fields are provided, including a visual field for viewing distance, a visual field for viewing up close, and visual fields for viewing intermediate distances. Examples of progressive dioptric power lens that can be manufactured by the present invention include, first, a single-sided progressive dioptric power lens having a progressive surface either on a first dioptric surface that is the object-side surface, or a second dioptric surface that is the eyeball-side surface, second, dual-surface aspherical progressive dioptric power lens with progressive dioptric power effects distributed between the first dioptric surface that is the object-side surface and the second dioptric surface that is the eyeball-side outer surface, in which the first surface and the second surface collectively impart a far degree and introduction degrees based on the prescription. The progressive dioptric power lens has, for example, a degree distribution such as that shown in Figs. 2 to 5, or the cross-section shown in Figs. 6a or 6b. Based on the above support method, even lenses of such complex surface shapes can be stably held during heat treatment. In particular, the above support method is suitably applied to lenses having shapes that have conventionally been difficult to stably support in the form of lenses with lower surfaces that are progressive and lenses comprising asymmetric surfaces having progressive elements.

The heat treatment in the fourth step, described further below, is desirably conducted while supporting the lens by the above support method. In that case, it is desirable for the surface on which the coating film has been formed to be positioned facing downward. This can prevent the adhesion of foreign matter on the film positioned on the outermost surface of the lens, as set forth above. Further, since the edge surface is supported during the heat treatment in the above support method, it is possible to conduct the heat treatment with the lower lens surface in a state of non-contact with the support member. This is advantageous, for example, when the coating film tends to be damaged by contact with the support member, such as when conducting the heat treatment with the coating film in a partially cured state. When the uncured film and support member come into contact, not only does the smoothness of the film diminish, but a portion of the film is sometimes damaged in the course of removing the lens from the support member following the heat treatment, or a potential decrease in adhesion sometimes results. In the method of conducting the heat treatment while supporting the rim of the lower lens surface, the coating film is pressed by the support member along the rim, sometimes reducing the thickness of this portion. Reducing the thickness of part of the film in this manner may cause a decrease in the adhesion of the film and the lens. In particular, when adhesion decreases along the rim of the lower lens surface, the film tends to peel off, resulting in reduced adhesion of the entire film. By contrast, the above support method can permit supporting the lens with the lower lens surface and the support member in a state of non-contact, thereby permitting heat treatment free of these problems. In the heat treatment, the upper surface of the lens is normally in a state of non-contact with the support member. In the above support method, it is not necessary for the lower lens surface and the support member to be in a state of non-contact during the heat treatment; for example, in the first step, when no coating film has been formed on the lower surface, there are times when more stable support can be afforded by having a portion of the lower lens surface contact the support member.

The edge surface of the lens that is supported by the support member in the above support method will be described next.

The edge surface of the lens is a tapered surface with a reverse-tapered shape with respect to the surface that is positioned facing downward. In the above support method, it suffices for there to be a tapered surface with the above shape; it is not necessary for the entire edge surface to constitute a tapered surface. However, from the perspectives of mounting stability and ease of processing, it is desirable for the entire edge surface to be a tapered surface, as shown in the example of Fig. 1.

The angle of incline of the tapered surface is not specifically limited. For example, even a small angle of about 0.01 to 5° makes it possible to support the lens. The use of an angle of incline of about 5 to 45° can permit even more reliable support of the lens. As shown in the lower drawing of Fig. 1, the tapered surface desirably forms a part of the lateral surface of a cone sharing a common vertex. Thus, it is possible to stably support the lens at the edge surface thereof with the lower lens surface and the support member in a state of non-contact.

The support member that supports the plastic lens of the above shape will be described next.

The support member that supports the lens during the heat treatment in the above support method is not specifically limited other than that it be capable of supporting the edge surface (tapered surface) of the lens, and may, for example, be in the form of a ring-shaped member. The lens edge surface can be supported at multiple points (desirably three or more points). In that case, for example, a ring-shaped member having protrusions on its inner circumference can be employed as the support member. As shown in Fig. 1, for example, for stable support, a ring-shaped member having on its inner circumference a surface into which the above tapered surface fits is desirably employed as the support member, and the above tapered surface is desirably inserted into this surface to support the lens. The inner diameter of the lower surface of the opening of the support member can either be made roughly identical to the outer diameter of the lens on the lower lens surface side, or made larger than the outer diameter of the lens on the lower lens surface side, but smaller than the outer diameter of the lens on the upper lens surface side. The latter is desirable to maintain the lower lens surface and the support member in a state of non-contact.

The lens support member is desirably manufactured with a lightweight, heat-resistant material. Examples of such materials are plastics, ceramics, and metallic materials such as aluminum alloys.

A support method suited to supporting the lens substrate during the heat treatment has been described above. It is also possible to support the lens substrate by a known method, such as the method described in the Specification of Japanese Patent No. 2,783,499.

It suffices to heat the lens substrate to a temperature greater than or equal to the glass transition temperature Tg of the substrate, desirably a temperature greater than or equal to Tg but approximately less than or equal to Tg + 10°C, approximately for a period permitting elimination of distortion within the substrate. For example, once the temperature of the surface of the lens substrate has reached a set temperature, this temperature is desirably maintained for about 30 to 120 minutes. The rate at which the temperature is increased to the set temperature is not specifically limited; however, it should be determined by taking into account the thermal characteristics of the plastic material constituting the lens substrate. For example, a rate of about 1.3 to 1.7°C/minute can be employed. The lens substrate can be cooled by allowing it to cool on its own following the heat treatment. However, since the heat history during cooling may also affect optical characteristics, an annealing furnace or the like is desirably employed to control the cooling rate. A cooling rate of about 2 to 5°C/minute can be employed, for example. The heat treatment can be conducted in a heating furnace, for example, with heat, ultraviolet radiation, infrared radiation, an electron beam, microwaves, or the like.

A coating film is formed on the lens substrate the internal distortion of which has been eliminated or reduced by the heat treatment.

By the way, there are cases in which adhesion can be enhanced by forming bonds between the polymer constituting the lens substrate and the components in the coating film when the entire lens is subjected to a heat treatment at an elevated temperature after forming the coating film on a plastic lens substrate. By contrast, in the present invention, the heating temperature in the heat treatment to which the lens is subjected after forming the coating film is set lower than the Tg of the substrate, and is thus relatively low. To enhance adhesion when decreased adhesion due to the low heating temperature is a concern, it is desirable that the surface of the plastic lens substrate on which the coating film is formed (also referred to hereinafter as the "coated surface") is subjected to at least one surface treatment selected from the group consisting of a surface cleaning treatment, a surface activation treatment, a surface area increasing treatment, and a surface coating application treatment; a coupling agent is added to the photocurable composition; and the photocurable composition is applied to a surface that has been subjected to the above surface treatment. The above surface treatment is desirably conducted prior to heating the substrate to greater than or equal to its Tg, described above.

The above surface treatment is at least one surface treatment selected from the group consisting of a surface cleaning treatment, a surface activation treatment, a surface area increasing treatment, and a surface coating application treatment. These surface treatments can increase adhesion between the coating film and the substrate even when a relatively low temperature, that is lower than the glass transition temperature of the substrate, is set as the temperature in the subsequent heating step. Although it is not precisely known why a surface cleaning treatment increases adhesion, such a treatment is presumed to either increase adhesion by removing foreign matter on the coated surface, or by imparting suitable surface roughness to the coated surface, thereby enhancing adhesion through an anchoring effect. A surface activation treatment is thought to increase the reactivity of the coated surface, thereby forming strong bonds between the coupling agent in the coating film and the substrate. A surface area increasing treatment is thought to have the effect of increasing adhesion through an anchoring effect by imparting suitable surface roughness to the coated surface. And a surface coating application treatment has the effect of increasing adhesion between the surface of the lens substrate and the coating film by forming a film functioning as an adhesive layer.

Examples of the surface cleaning treatment are surface treatments selected from the group consisting of alkali treatments, polishing treatments, exposure to ozone, corona discharge, irradiation with ultraviolet radiation, and plasma discharge. Examples of the surface activation treatment are surface treatments selected from the group consisting of alkali treatments, exposure to ozone, corona discharge, irradiation with ultraviolet radiation, and plasma discharge. An example of the surface area increasing treatment is a surface treatment by polishing treatment. An example of the surface coating treatment is surface treatment by application of a primer layer (undercoating layer). A water-based coating liquid containing a resin component and a water-based solvent is suitable as the primer liquid. Examples of the resin component are polyurethane resin, vinyl acetate, and ethylene vinyl copolymers in the form of olefin-based, acrylic-based, epoxy-based, and urethane-based emulsions and the like. Desirable examples of the primer liquid are emulsions obtained by dispersing the above resin component in a water-based solvent (such as water or a mixed solvent of water and alcohol, ketone, cellosolve, or the like). Of these, the use of urethane-based emulsions having polar functional groups that are advantageous for developing adhesion to the surface of the lens substrate is desirable. The primer liquid can be applied on the coated surface of the lens substrate by a coating method such as spin-coating or dipping. Since the above water-based primer liquid has the property of solidifying when the solvent is removed, a high-temperature treatment to form a coating is unneeded; this is different from a polymerizable composition. This is advantageous because there is no risk of the lens substrate being deformed by the heat treatment used to form the primer. The concentration of the solid component of the coating liquid desirably falls within a range of 20 to 50 mass percent from the perspectives of liquid stability and ensuring film thickness.

The surface treatment desirably comprises at least one treatment selected from the group consisting of an alkali treatment, polishing treatment, exposure to ozone, corona discharge, irradiation with ultraviolet radiation, plasma discharge, application of a primer layer, and solvent treatment. When the glass transition temperature of the lens substrate is relatively low (for example, lower than or equal to 100°C) and the temperature of the heat treatment following coating film formation, described further below, is relatively low, a combination of two or more surface treatments is desirable. For example, a polishing treatment can be conducted after drying the lens substrate by blow drying or the like, as needed, following an alkali treatment.

All of the above surface treatments can be conducted by known methods. For example, the alkali treatment can be conducted by immersing the entire lens substrate, or a part of the lens substrate comprising the coated surface, in a known alkali solution such as a sodium hydroxide aqueous solution or potassium hydroxide aqueous solution. The concentration of the alkali in the alkali solution is, for example, 5 to 20 mass percent, preferably about 8 to 11 mass percent. Neither the temperature of the alkali solution nor the period of immersion is specifically limited, other than that they be set taking into account the content of the coupling agent and the like in the coating liquid. For example, an alkali solution temperature of about 50 to 70°C and an immersion period of about 200 to 800 seconds can be employed. For example, the polishing treatment can be conducted by sliding and rotating the surface of the lens substrate relative to a polishing pad. The rotational speed when this is done can be suitably set; for example, about 400 to 600 rpm is desirable. Further, the polishing pad is desirably slid in the direction of the principal meridians of the eyeglass lens. The polishing pad can be slid in a cycle of about 1 to several times per second. A polishing pad made of a material such as foam polyurethane, felt, nonwoven cloth, some other fibrous cloth, or synthetic resin can be employed. In exposure to ozone, the surface treatment can be conducted by placing the surface of the lens substrate in an ozone atmosphere. Generally, UV with a wavelength of lower than or equal to 240 nm breaks down oxygen, and radiation of 172 nm or 185 nm generates ozone from oxygen. A surface treatment with ozone is thought to have the effects of increasing surface energy, increasing hydrophilic properties, and enhancing the adhesion (adhesive strength) that depends on hydrophilic properties. When conducting the exposure to ozone, the lens substrate is desirably comprised of a plastic material other than an allyl-based one. The period of UV irradiation to generate ozone can be about 60 to 180 seconds employing, for example, the above device.

### Second step

In this step, a photocurable composition is coated on at least one of the surfaces of the lens substrate that has been subjected to a heat treatment in the first step. The photocurable composition is coated on at least one of the surfaces of the lens substrate, and can be coated on both of the surfaces. It is desirably coated on just one surface in terms of facilitating irradiation with light.

Examples of the photocurable composition are coating liquids (photochromic liquids) for forming functional films to impart photochromic properties to lenses. Since photochromic films are generally thick, the distortion within the film may greatly affect optical characteristics. Further, the polymerization reaction progresses rapidly, tending to produce internal distortion, when conducting the curing reaction by photopolymerization, particularly by radical polymerization. By contrast, since a heat treatment is conducted at a temperature greater than or equal to the Tg of the film in the fourth step, described further below, distortion within the film can be effectively eliminated and a lens free of distortion in both the substrate and the film can be obtained according to the present invention. Thus, the present invention is suitable as a method for manufacturing plastic lenses having a cured film in the form of a photochromic film.

The photochromic liquid comprises at least a photochromic dye and a photocurable component, and optionally comprises a polymerization initiator and additives. Each of these components will be described below.

### (i) Curable components

The curable components that can be employed to prepare the photochromic film are not specifically limited so long as they are photocurable components. Known photopolymerizable monomers and oligomers, and their prepolymers, having radical polymerizable groups such as (meth)acryloyl groups, (meth)acryloyloxy groups, vinyl groups, allyl groups, and styryl groups, can be employed. Of these, compounds having a radical polymerizable group in the form of a (meth)acryloyl group or (meth)acryloyloxy group are desirable because of availability and ease of curing. The (meth) acryloyl denotes both acryloyl and methacryloyl.

To prevent mixing at the interface between the photochromic film and the lens substrate, facilitate hardness adjustment, achieve good solvent resistance and hardness following film formation, achieve good cured product characteristics such as heat resistance, and achieve good photochromic characteristics such as darkening density and fading speed, a radical polymerizable monomer exhibiting a Rockwell L scale hardness of equal to or higher than 60 (also sometimes referred to as a "high-hardness monomer", hereinafter) as a homopolymer is desirably employed. In addition, a radical polymerizable monomer exhibiting a Rockwell L scale hardness of equal to or lower than 40 (also sometimes referred to as a "low-hardness monomer", hereinafter) as a homopolymer is also desirably employed in combination with the high-hardness monomer. The addition of the low-hardness monomer has the effects of yielding a cured product of great toughness and increasing the fading speed of the photochromic compound.

The "Rockwell L scale hardness" refers to the hardness as measured according to JIS-B7726. Whether or not the above hardness condition is satisfied can be simply determined by conducting measurement of the homopolymers of the individual monomers. Specifically, the monomer is polymerized to obtain a cured product 2 mm in thickness. This is then maintained for one day indoors at 25°C. A Rockwell hardness meter is then employed to measure the Rockwell L scale hardness, permitting ready confirmation.

The polymer that is used in the measurement of the Rockwell L scale hardness is obtained by conducting casting polymerization under conditions where 90 percent or more of the polymerizable groups of the charged monomer polymerize. The Rockwell L scale hardness of a cured product that has been polymerized under such conditions will give measurements of nearly constant value.

The high-hardness monomer has the effect of enhancing the solvent resistance, hardness, and heat resistance of the cured product. A radical polymerizable monomer exhibiting a Rockwell L scale hardness of 65 to 130 as a homopolymer is desirable to effectively achieve the above effects.

Such a high-hardness monomer is normally a compound having 2 to 15, desirably 2 to 6, radical polymerizable groups. Specific desirable examples are the compounds denoted by general formulas (1) to (5) below: 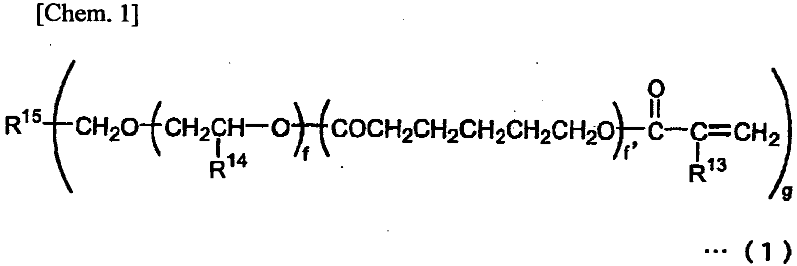 (In the formula, R¹³ is a hydrogen atom or methyl group, R¹⁴ is a hydrogen group, methyl group or ethyl group, R¹⁵ is a trivalent to hexavalent organic group, f is an integer ranging from 0 to 3, f' is an integer ranging from 0 to 3, and g is an integer ranging from 3 to 6.) 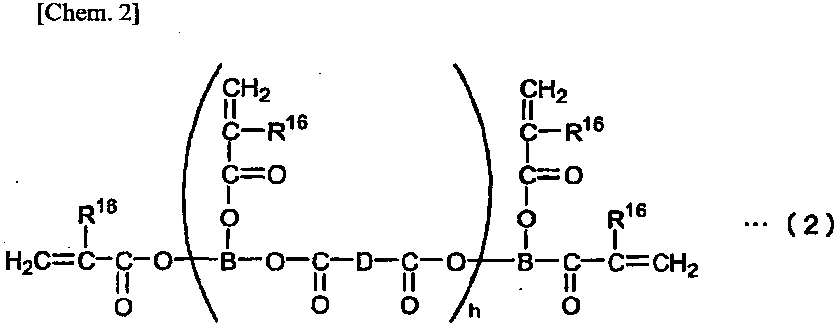 (In the formula, R¹⁶ is a hydrogen atom or methyl group, B is a trivalent organic group, D is a divalent organic group, an h is an integer ranging from 1 to 10.) 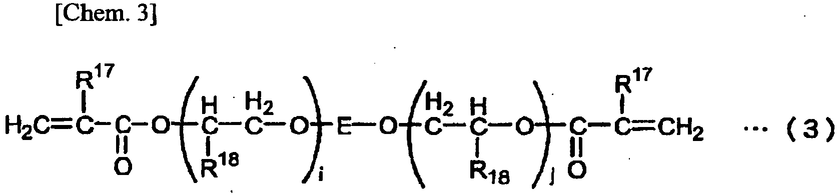 (In the formula, R¹⁷ is a hydrogen atom or methyl group, R¹⁸ is a methyl group, ethyl group or hydroxyl group, E is a divalent group comprising a cyclic group, and i and j are positive integers with an average value of i + j of 0 to 6.) 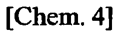 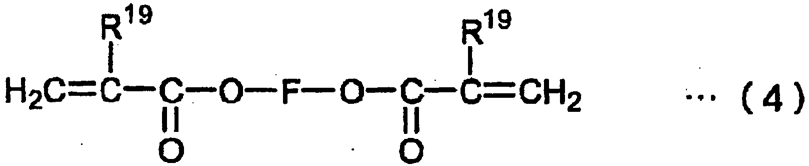 (In the formula, R¹⁹ is a hydrogen atom or methyl group, and F is an alkylene group having 2 to 9 carbon atoms on the main chain thereof and optionally having a side chain.) 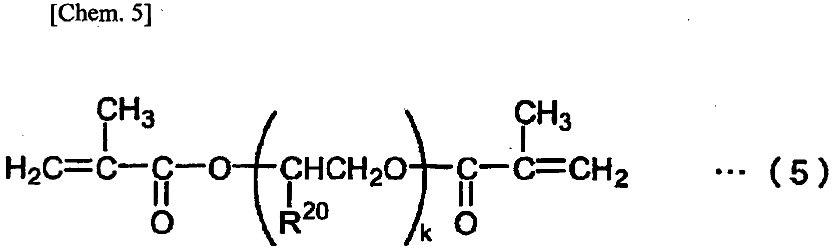 (In the formula, R²⁰ is a hydrogen atom, methyl group or ethyl group, and k is an integer ranging from 1 to 6.)

In general formulas (1) to (4) above, each of R¹³ to R¹⁹ is a hydrogen atom or a methyl group. Thus, the compounds denoted by general formulas (1) to (4) comprise 2 to 6 (meth)acryloyloxy groups.

In general formula (1), R¹⁴ is a hydrogen atom, methyl group, or ethyl group.

In general formula (1), R¹⁵ is a trivalent to hexavalent organic group. The organic group is not specifically limited, and may comprise on the main chain thereof a bond other than a carbon-carbon bond, such as an ester bond, ether bond, amide bond, thioether bond, sulfonyl bond, or urethane bond.

To exhibit a Rockwell L scale hardness of equal to or higher than 60 as a homopolymer, R¹⁵ is desirably an organic group having 1 to 30 carbon atoms, preferably an organic group having 1 to 15 carbon atoms, optionally comprising an ether bond and/or a urethane bond.

Each of f and f is independently an integer falling within a range of 0 to 3. To achieve a Rockwell L scale hardness of equal to or higher than 60, the sum of f and f is desirably 0 to 3.

Specific examples of the high-hardness monomer denoted by the above general formula (1) are: trimethylolpropane trimethacrylate, trimethylolpropane triacrylate, tetramethylolmethane trimethacrylate, tetramethylolmethane triacrylate, trimethylolpropane trimethacrylate, tetramethylolmethane tetramethacrylate, tetramethylolmethane tetraacrylate, trimethylolpropane triethylene glycol trimethacrylate, trimethylolpropane triethyleneglycol triacrylate, ethoxylated pentaerythritol tetraacrylate, ethoxylated pentaerythritol tetramethacrylate, pentaerythritol trimethacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, caprolactone-modified dipentaerythritol hexaacrylate, and ditrimethylolpropane tetraacrylate.

In the above general formula (2), B is a trivalent organic group and D is a divalent organic group. The B and D are not specifically limited, and may comprise in the main chains thereof a bond other than a carbon-carbon bond, such as an ester bond, ether bond, amide bond, thioether bond, sulfonyl bond, or urethane bond. To achieve a Rockwell L scale hardness of equal to or higher than 60 as a homopolymer, B is desirably an organic group derived from a linear or branched hydrocarbon having 3 to 10 carbon atoms, and D is desirably an organic group derived from an aliphatic linear or branched chain hydrocarbon having 1 to 10 carbon atoms or an aromatic hydrocarbon having 6 to 10 carbon atoms.

To achieve a Rockwell L scale hardness of equal to or higher than 60 as a homopolymer, h is an integer ranging from 1 to 10, desirably an integer ranging from 1 to 6.

Specific examples of high-hardness monomers denoted by the above general formula (2) are: tetrafunctional polyester oligomers with a molecular weight of 2,500 to 3,500 (such as EB80, Daicel UCB Co., Ltd.); tetrafunctional polyester oligomers with a molecular weight of 6,000 to 8,000 (such as EB450, Daicel UCB Co., Ltd.); hexafunctional polyester oligomers with a molecular weight of 45,000 to 55,000 (such as EB1830, Daicel UCB Co., Ltd.), and tetrafunctional polyester oligomers with a molecular weight of 10,000 (such as GX8488B, DAI-ICHI KOGYO SEIYAKU CO., LTD.).

In the above general formula (3), R¹⁸ is a hydrogen atom, methyl group, ethyl group, or hydroxyl group. In general formula (3), E denotes a divalent organic group comprising a cyclic group. The organic group is not specifically limited other than that it comprises a cyclic group, and may comprise a bond other than a carbon-carbon bond, such as an ester bond, ether bond, amide bond, thioether bond, sulfonyl group, or urethane bond in the main chain thereof. Examples of the cyclic group comprised in E are benzene rings, cyclohexane rings, adamantane rings, and the cyclic groups indicated below.

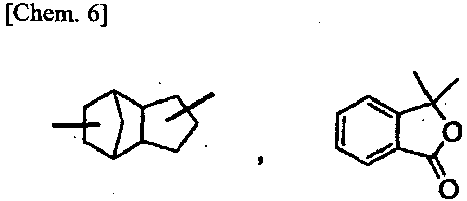

The cyclic group comprised in E is preferably a benzene ring, and E is more preferably a group denoted by the following formula: 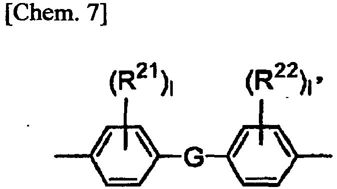 (wherein G is any of groups selected from a oxygen atom, sulfur atom, -S(O₂)-, -C(O)-, -CH₂-, -CH=CH-, -C(CH₃)₂-, and -C(CH₃)(C₆H₅)-, each of R²¹ and R²² is independently an alkyl group having 1 to 4 carbon atoms or a halogen atom, and each of 1 and 1' is independently an integer ranging from 0 to 4), and the most preferable E is a group denoted by the following formula:

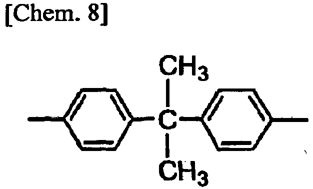

In the above general formula (3), i and j denote positive integers with an average value of i+j of 0 to 6. The compound denoted by general formula (3), excluding the case where both i and j are 0, can normally be obtained as a mixture of multiple compounds of differing i and j. Since they are difficult to isolate, i and j are indicated as an average value of i+j. The average value of i+j is preferably 2 to 6.

Specific examples of the high-hardness monomer denoted by general formula (3) are bisphenol A dimethacrylate, 2,2-bis(4-methacryloyloxyethoxyphenyl)propane, and 2,2-bis(3,5-dibromo-4-methacryloyloxyethoxyphenyl)propane.

In the above general formula (4), R¹⁹ is a hydrogen atom or a methyl group, and F is an alkylene group having 2 to 9 carbon atoms on the main chain thereof and optionally having a side chain. Examples of the alkylene group having 2 to 9 carbon atoms on the main chain thereof are: ethylene, propylene, trimethylene, butylene, neopentylene, hexylene, and nonylylene groups.

Specific examples of the high-hardness monomer denoted by general formula (4) are ethylene glycol diacrylate, ethylene glycol dimethacrylate, 1,4-butylene glycol dimethacrylate, 1,9-nonylene glycol dimethacrylate, neopentylene glycol dimethacrylate, and neopentylene glycol diacrylate.

In the above general formula (5), R²⁰ is a hydrogen atom, methyl group, or ethyl group, and k is an integer ranging from 2 to 6, desirably 3 or 4.

Specific examples of the high-hardness monomer denoted by general formula (5) are: diethylene glycol dimethacrylate, triethylene glycol dimethacrylate, tetraethylene glycol dimethacrylate, tripropylene glycol dimethacrylate, and tetrapropylene glycol dimethacrylate.

Depending on the combination of substituent, some of the compounds denoted by the above general formulas (1) to (5) may become a homopolymer with a Rockwell L scale hardness of less than 60. In such cases, these compounds are classified as the low-hardness monomers or medium-hardness monomers.

There are also high-hardness monomers that are not denoted by the above general formulas (1) to (5). Typical examples of such compounds are: bisphenol A diglycidyl methacrylate, ethylene glycol bisglycidyl methacrylate, and glycidyl methacrylate.

### (ii) Photochromic dye

Known photochromic dyes can be added to the photochromic liquid. Examples are photochromic compounds such as fulgimide compounds, spiro-oxazine compounds, and chromene compounds. These photochromic compounds can be employed without specific limitation in the present invention.

For example, the compounds described in Japanese Unexamined Patent Publication (KOKAI) Heisei No. 2-28154, Japanese Unexamined Patent Publication (KOKAI) Showa No. 62-288830, the Specification of No. WO94/22850, and the Specification of No. WO96/14596, can suitably employed as the above fulgimide compounds, spiro-oxazine compounds, and chromene compounds.

The compounds disclosed in Japanese Unexamined Patent Publication (KOKAI) Nos. 2001-114775, 2001-031670, 2001-011067, 2001-011066, 2000-347346, 2000-34476, 2000-3044761, 2000-327676, 2000-327675, 2000-256347, 2000-229976, 2000-229975, 2000-229974, 2000-229973, 2000-229972, 2000-219687, 2000-219686, and 2000-219685; and Japanese Unexamined Patent Publication (KOKAI) Heisei Nos. 11-322739, 11-286484, 11-279171, 10-298176, 09-218301, 09-124645, 08-295690, 08-176139, and 08-157467 are suitably employed as compounds having excellent photochromic properties.

Of these photochromic compounds, the use of chromene-based photochromic compounds is particularly desirable because the durability of their photochromic characteristics is particularly greater than that of other photochromic compounds, and the enhancement in photochromic characteristics such as darkening density and fading speed is greater than in other photochromic compounds. Among these chromene-based photochromic compounds, those having a molecular weight of equal to or greater than 540 are suitably employed because the improvement in photochromic characteristics by the present invention, such as darkening density and fading speed, is particularly pronounced relative to other chromene-based photochromic compounds.

Multiple kinds of these photochromic compounds can be suitably mixed for use to exhibit suitable darkening tones.

The concentration of the photochromic dye in the photochromic liquid is desirably 0.01 to 20 mass parts, preferably 0.1 to 10 mass parts, per 100 mass parts of the above-described polymerizable component (radical polymerizable monomer and the like).

### (iii) Polymerization initiator

The polymerization initiator that is added to the photochromic liquid can be suitably selected from among known photopolymerization initiators based on the polymerization method.

The photopolymerization initiator is not specifically limited. Examples are benzoin, benzoin methyl ethyl, benzoin butyl ether, benzophenol, acetophenone, 4,4'-dichlorobenzophenone, diethoxyacetophenone, 2-hydroxy-2-methyl-1-phenylpropane-1-one, benzyl methyl ketal, 1-(4-isopropylphenyl)-2-hydroxy-2-methylpropane-1-one, 1-hydroxycyclohexyl phenyl ketone, 2-isopropylthiooxanthone, bis(2,6-dimethoxybenzoyl-2,4,4-trimethyl pentyl phosphine oxide, bis(2,4,6-trimethylbenzoyl)phenyl phosphine oxide, 2,4,6-trimethylbenzoyldiphenyl phosphine oxide, and 2-benzyl-2-dimethylamino-1-(4-morpholinophenyl)butanone-1. Desirable compounds are 1-hydroxycyclohexyl phenyl ketone, 2-isopropylthiooxanthone, bis(2,6-dimethoxybenzoyl-2,4,4-trimethyl pentyl phosphine oxide, bis(2,4,6-trimethylbenzoyl)phenyl phosphine oxide, and 2,4,6-trimethylbenzoyldiphenyl phosphine oxide. As described above, the present invention can yield a plastic lens with excellent optical characteristics in which distortion of both the substrate and the film are removed, even when a photo-induced radical polymerization initiator is employed and a photochromic film is formed through a radical polymerization. Accordingly, the present invention is particularly suited when forming a cured film with a photocurable composition comprising a polymerization initiator in the form of a photo-induced radical polymerization initiator.

Multiple kinds of these photopolymerization initiators may be suitably mixed for use. The blending amount of the photopolymerization initiator to the total quantity of photochromic liquid is normally 0.001 to 5 mass parts, desirably 0.1 to 1 mass part, per 100 mass parts of the polymerizable component (radical polymerizable monomer and the like).

### (iv) Additives

To enhance the durability of the photochromic dye, increase the darkening speed, increase the fading speed, and enhance moldability, additives such as surfactants, oxidation inhibitors, radical scavengers, UV stabilizers, UV absorbing agents, mold release agents, coloration inhibitors, antistatic agents, fluorescent colorants, colorants, pigments, fragrance materials, and plasticizers can be added to the photochromic liquid. Known compounds can be employed as the additives without specific limitation.

Any from among nonionic, anionic, and cationic surfactants can be employed as the surfactants. However, the use of nonionic surfactants is desirable due to their solubility in polymerizable monomers. Specific examples of suitably employed nonionic surfactants are: sorbitan fatty esters, glycerin fatty esters, decaglycerin fatty esters, propylene glycol/pentaerythritol fatty esters, polyoxyethylene sorbitan fatty esters, polyoxyethylene sorbit fatty esters, polyoxyethylene glycerin fatty esters, polyethylene glycol fatty esters, polyoxyethylene alkyl ethers, polyoxyethylene phytosterol/phytostanols, polyoxyethylene polyoxypropylene alkyl ethers, polyoxyethylene alkyl phenyl ethers, polyoxyethylene castor oil/hardened castor oil, polyoxyethylene lanolin/lanolin alcohol/beeswax derivatives, polyoxyethylene alkyl amines/fatty acid amides, polyoxyethylene alkyl phenyl formaldehyde condensates, and single-chain polyoxyethylene alkyl ethers. In the use of the surfactant, two or more surfactants may be combined for use. The quantity of surfactant added desirably falls within a range of 0.1 to 20 mass percent per 100 mass parts of the above-described polymerizable components.

Oxidation inhibitors, radical scavengers, UV stabilizers, and UV absorbing agents may be suitably employed in the form of hindered amine light stabilizers, hindered phenol oxidation inhibitors, phenol-based radical scavengers, sulfur-based oxidation inhibitors, benzotriazole-based compounds, benzophenone-based compounds, and the like. These oxidation inhibitors, radical scavengers, UV stabilizers, and UV absorbing agents can be employed in combinations of two or more. In the use of these nonpolymerizable compounds, surfactants may be employed in combination with oxidation inhibitors, radical scavengers, UV stabilizers, and UV absorbing agents. The quantity that is added of these oxidation inhibitors, radical scavengers, UV stabilizers, and UV absorbing agents desirably falls within a range of 0.001 to 20 mass parts per 100 mass parts of the above-described polymerizable components.

There is a known problem of polymer materials being degraded by the following mechanism due to oxidation in the presence of oxygen that is occasioned by energy such as ultraviolet radiation and heat. First, when a polymeric compound is exposed to a high level of energy, such as by being irradiated with UV, radicals are produced within the polymer. These then serve as starting points for the generation of new radicals and peroxides. Since peroxides are generally unstable, they are readily decomposed by heat and light, producing more new radicals. Once oxidation has begun in this manner, it begins to occur in chainlike fashion, degrading the polymer material and reducing its function. To prevent oxidation by such a mechanism, the methods of (1) rendering the radicals that have been produced inactive, and (2) breaking down the peroxides that have been generated into harmless substances, so that they stop producing radicals, are conceivable. Accordingly, the use of compounds capable of capturing radicals (radical scavengers) to prevent oxidation by method (1) is conceivable, and the use of compounds having the ability to break down peroxides (peroxide compound degrading agents) to prevent oxidation by the method of (2) is conceivable. In the present invention, the use of both compounds having the ability to scavenge radicals and compounds having the ability to break down peroxides as oxidation inhibitors is possible. The use of compounds having the ability to scavenge radicals is desirable. Photochromic compounds absorb ultraviolet radiation from sunlight, develop color as their molecular structure changes, and return to their original state when they absorb heat and visible light. Energy is transferred to oxygen along this change pathway in the presence of oxygen, producing oxygen radicals of great oxidizing power. Accordingly, compounds having the ability to scavenge radicals can capture these oxygen radicals, thereby effectively preventing oxidation in the photochromic film.

From the above perspectives, hindered amine and hindered phenol compounds are examples of desirable additives. Since these compounds can exhibit the ability to scavenge radicals, they can prevent the oxidation of the photochromic film that is obtained to enhance durability. The addition of the above compounds can also prevent deterioration of the photochromic dye during curing. Known hindered amine and hindered phenol compounds may be employed without specific limitation. Among the hindered amine compounds, when employed in coating, particularly as compounds having the effect of preventing the deterioration of photochromic dyes, examples are bis(1,2,2,6,6-pentamethyl-4-piperidyl)sebacate and the like. A desirable example of a hindered phenol compound is dibutyl hydroxytoluene acid (BHT). The quantity added, by way of example, falls within a range of 0.001 to 20 mass parts, desirably a range of 0.1 to 10 mass parts, and preferably, a range of 1 to 5 mass parts per 100 mass parts of the above-described polymerizable components.

The various additives, such as the above compounds having radical-scavenging ability, can be added to the photochromic liquid, and can also be added following formation of the photochromic film by impregnation treatment or the like. In that case, impregnation is desirably conducted by applying a compound having radical-scavenging ability from the surface on the object side.

It is also desirable to incorporate surfactants, leveling agents, and the like into the photochromic liquid to enhance uniformity during film formation. The addition of silicone-based and fluorine-based leveling agents having leveling capability is particularly desirable. The quantity added is not specifically limited. A quantity of 0.01 to 1.0 mass percent of the total quantity of photochromic liquid is normal, and 0.05 to 0.5 mass percent is desirable.

The photocurable composition can also contain a coupling agent. The incorporation of a coupling agent can enhance adhesion of the plastic lens substrate and the coating film. To further enhance adhesion, as set forth above, it is desirable to subject the coated surface to at least one surface treatment selected from the group consisting of a surface cleaning treatment, surface activation treatment, surface area increasing treatment, and surface coating application treatment before coating the photocurable composition containing a coupling agent (also referred to as the "coating liquid containing a coupling agent" hereinafter).

Various coupling agents, such as silane coupling agents and titanium coupling agents, can be employed as the above coupling agent. A silane coupling agent is desirably employed from the perspective of reactivity and the like. Examples of silane coupling agents that are desirable to enhance adhesion are one or more of the coupling agents denoted by general formula (I):

R¹ₘ Si X¹₍₄₋ₘ₎ (I)

(wherein R¹ denotes an organic group, X¹ denotes -OR², R² denotes an alkyl group, and m denotes the integer 1 or 2).

In the silane compound denoted by general formula (I), one or two organic groups are substituted onto the atoms of the silane, with alkoxy groups being substituted at all the other bonding hands. Examples of organic group R¹ are: a methyl group, ethyl group, n-propyl group, isopropyl group, n-butyl group, isobutyl group, sec-butyl group, tert-butyl group, octadecyl group, n-octyl group, chloromethyl group, methoxyethyl group, hydroxyethyl group, aminoethyl group, mercaptopropyl group, phenyl group, benzyl group, hydroxyphenyl group, chlorophenyl group, aminophenyl group, vinyl group, allyl group, acryloxyethyl group, methacryloxyethyl group, glycidoxypropyl group, and acetoxy group. Examples of the alkoxy group denoted by X¹ are: a methoxy group, ethoxy group, n-propoxy group, isopropoxy group, n-butoxy group, isobutoxy group, sec-butoxy group, and tert-butoxy group. The number of carbon atoms of R² desirably falls within a range of 1 to 4 from the perspective of keeping the molecular weight of the alcohol that dissociates relatively low, permitting ready elimination, and inhibiting a decrease in the density of the film that is formed.

Examples of silane coupling agents denoted by general formula (I) are: dimethyldimethoxysilane, diethyldiethoxysilane, di-n-propyldi-n-propoxysilane, diisopropyldiisopropoxysilane, di-n-butyldi-n-butyloxysilane, di-sec-butyldi-sec-butyloxysilane, di-t-butyl-t-butyloxysilane, methyloctadecyldimethoxysilane, methyldodecyldiethoxysilane, methyloctadecyldimethoxysilane, methyloctadecyldiethoxysilane, n-octylmethyldimethoxysilane, n-octylmethyldiethoxysilane, methyltrimethoxysilane, methyltriethoxysilane, methyltri-n-propoxysilane, methylisopropoxysilane, methyl-n-butyloxysilane, methyltri-sec-butyloxysilane, methyltri-t-butyloxysilane, ethyltrimethoxysilane, ethyltriethoxysilane, ethyltri-n-propoxysilane, ethylisopropoxysilane, ethyl-n-butyloxysilane, ethyltri-sec-butyloxysilane, ethyltri-t-butyloxysilane, n-propyltrimethoxysilane, isobutyltrimethoxysilane, n-hexyltrimethoxysilane, hexadecyltrimethoxysilane, n-octyltrimethoxysilane, n-dodecyltrimethoxysilane, n-octadecyltrimethoxysilane, n-propyltriethoxysilane, isobutyltriethoxysilane, n-hexyltriethoxysilane, hexadecyltriethoxysilane, n-octyltriethoxysilane, n-dodecyltrimethoxysilane, n-octadecyltriethoxysilane, diphenyldimethoxysilane, diphenyldiethoxysilane, dibenzyldimethoxysilane, dibenzyldiethoxysilane, phenyltrimethoxysilane, phenyltriethoxysilane, dibenzyltrimethoxysilane, dibenzyltriethoxysilane, 3-acetoxypropyltrimethoxysilane, 3-acryloxypropyltrimethoxysilane, allyltrimethoxysilane, allyltriethoxysilane, 4-aminobutyltriethoxysilane, (aminoethylaminomethyl)phenethyltrimethoxysilane, N-(2-aminoethyl)-3-aminopropylmethyldimethoxysilane, N-(2-aminoethyl)-3-aminopropyltrimethoxysilane, 6-(aminohexylaminopropyl)trimethoxysilane, p-aminophenyltrimethoxysilane, p-aminophenylethoxysilane, 3-aminopropyltrimethoxysilane, 3-aminopropyltriethoxysilane, ω-aminoundecyltrimethoxysilane, amyltriethoxysilane, benzooxasilepindimethylester, 5-(bicycloheptenyl)triethoxysilane, bis(2-hydroxyethyl)-3-aminopropyltriethoxysilane, 8-bromooctyltrimethoxysilane, bromophenyltrimethoxysilane, 3-bromopropyltrimethoxysilane, n-butyltrimethoxysilane, 2-chloromethyltriethoxysilane, chloromethylmethyldiethoxysilane, chloromethylmethyldiisopropoxysilane, p-(chloromethyl)phenyltrimethoxysilane, chloromethyltriethoxysilane, chlorophenyltriethoxysilane, 3-chloropropylmethyldimethoxysilane, 3-chloropropyltriethoxysilane, 3-chloropropyltrimethoxysilane, 2-(4-chlorosulfonylphenyl)ethyltrimethoxysilane, 2-cyanoethyltriethoxysilane, 2-cyanoethyltrimethoxysilane, cyanomethylphenethyltriethoxysilane, 3-cyanopropyltriethoxysilane, 2-(3-cyclohexenyl)ethyltrimethoxysilane, (cyclohexylaminomethyl)methyldiethoxysilane, (3-cyclopentadienylpropyl)triethoxysilane, N,N-diethyl-3-aminopropyltrimethoxysilane, β-(3,4-epoxycyclohexyl)ethyltrimethoxysilane, (3-glycidoxypropyl)methyldiethoxysilane, 3-glycidoxypropyltrimethoxysilane, 1,2,3,4,7,7-hexachloro-6-methyldiethoxysilyl-2-norbornene, 1,2,3,4,7,7-hexachloro-6-triethoxysilyl-2-norbornene, 3-iodopropyltrimethoxysilane, 3-isocyanate propyltriethoxysilane, (mercaptomethyl)methyldiethoxysilane, 3-mercaptopropylmethyldimethoxysilane, 3-mercaptopropyldimethoxysilane, 3-mercaptopropyltriethoxysilane, 3-methacryloxypropylmethyldiethoxysilane, 3-methacryloxypropyltrimethoxysilane, methyl {2-(3-trimethoxysilyl-propylamino)ethylamino}-3-propionate, 7-octenyltrimethoxysilane, R-N-a-phenethyl-N'-triethoxysilylpropylurea, S-N-a-phenethyl-N'-triethoxysilylpropylurea, phenethyltrimethoxysilane, N-phenylaminopropyltrimethoxysilane, phenylvinyldiethoxysilane, 3-thiocyanate propyltriethoxysilane, (tridecafluoro-1,1,2,2-tetrahydrooctyl)triethoxysilane, N-{3-(triethoxysilyl)propyl}phthalamidic acid, (3,3,3-trifluoropropyl)methyldimethoxysilane, (3,3,3-trifluoropropyl)trimethoxysilane, 1-trimethoxysilyl-2-(chloromethyl)phenylethane, 2-(trimethoxysilyl)ethylphenylsulfonylazide, β-trimethoxysilylethyl-2-pyridine, trimethoxysilylpropyldiethylenetriamine, N-{(3-trimethoxysilyl)propyl}ethylenediamine triacetic acid soda salt, N-(3-trimethoxysilyl)propyl)pyrrole, vinylmethyldiethoxysilane, vinylethoxysilane, vinyltrimethoxysilane, vinyltriphenoxysilane, and vinyltris-t-butoxysilane.

When adding a coupling agent contained to the photocurable composition, a single coupling agent or a combination of two or more coupling agents may be incorporated. As for the content of the coupling agent in the photocurable composition, to effectively increase adhesion, the concentration of the coupling agent added is desirably 0.1 to 49 mass percent, preferably 1 to 10 mass percent.

In the present invention, the method of preparing the photochromic liquid is not specifically limited. The photochromic liquid can be prepared by weighing out and mixing prescribed quantities of the various components. Nor is the order in which the various components are added specifically limited; all the components can be added simultaneously, or just the monomer components can be mixed in advance, with the photochromic dye and other additives being admixed just before polymerization.

The photochromic liquid desirably has a viscosity at 25°C of 20 to 500 cps, preferably 50 to 300 cps, and more preferably, 60 to 200 cps. Employing a viscosity within this range can facilitate coating for the photochromic liquid and make it easy to obtain a photochromic film of desired thickness.

The photocurable composition can be coated on the surface of the lens substrate in the present invention by a known coating method such as spin-coating or dipping.

### Third step

In this step, the photocurable composition that has been coated on the lens substrate in the second step is irradiated with light to cure at least a portion of the composition and form a cured film. Irradiating the photocurable composition that has been coated on the lens substrate with light can cure at least a portion of the composition and form a cured film. For example, in the case of a UV-curable composition, the lens can be positioned under a UV lamp with a surface to be coated on top and UV radiation can be irradiated onto the surface to be coated. In the present invention, the term "cured film" includes films in which at least a portion of a curable component has been cured, with a portion in which a curable component has not been completely cured remaining in an uncured state. Just the surface of the coating film is desirably cured; the interior desirably remains uncured. This is to prevent the accumulation of stress on the lens substrate due to curing of the film. Thus, in the above irradiation with light, conditions are desirably set so that a curing reaction of a suitable degree of polymerization for the components contained in the photocurable composition is conducted.

The thickness of the cured film that is formed is not specifically limited. For example, in the case of a photochromic film, to achieve a good photochromic property, the thickness is desirably equal to or more than 10 micrometers, preferably 10 to 60 micrometers, and more preferably, 20 to 60 micrometers. In the present invention, distortion in such a relatively thick cured film can be effectively eliminated in the fourth step, described further below.

### Fourth step

In this step, the entire lens, including the cured film formed in the third step, is subjected to a heat treatment. This heat treatment is conducted at a temperature lower than the glass transition temperature of the substrate but greater than or equal to the glass transition temperature of the cured film. Thus, it is possible to eliminate or reduce distortion within the film without causing deformation of the substrate.

The temperature during the heat treatment is not specifically limited other than that it be lower than the glass transition temperature of the substrate but greater than or equal to the glass transition temperature of the cured film. To effectively eliminate distortion in the film, the heat treatment is desirably conducted at a temperature falling within a range of greater than or equal to the glass transition temperature Tg of the cured film but less than or equal to Tg + 10°C. To effectively prevent deformation of the lens substrate, the heat treatment is desirably conducted at a temperature that is about 10 to 50°C below the glass transition temperature of the lens substrate. The glass transition temperature of a photochromic film depends on the type of components contained, but is generally about 50 to 70°C. The heat treatment can be conducted in a heating furnace, for example, with heat, ultraviolet radiation, infrared radiation, an electron beam, microwaves, or the like. The rate of increase in the temperature, retention time at a set temperature, and cooling rate can be set based on the conditions described for the first step above.

Following the fourth step, the lens substrate can be shipped as is as a lens product, or further provided with a hardcoat film, antireflective film, or the like. However, when a functional film is further formed on the cured film, it is desirably made thin enough for distortion in the functional film not to affect the optical characteristics of the lens. When forming a functional film on the coating film, it is desirable not to conduct the heat treatment at a temperature greater than or equal to the Tg of the substrate so as to prevent deformation of the lens substrate. It is also desirable not to conduct the heat treatment at a temperature greater than or equal to the Tg of the coating film so as to prevent deformation of the coating film. As set forth above, when the edge surface of the lens substrate is tapered, the tapered surface is normally removed by grinding, polishing, or the like prior to shipment of the finished product. However, use without removing the tapered surface is possible in some applications.

When the lens substrate is to be semifinished, grinding and polishing (generally referred to as CG processing) of the back surface of the lens (the opposite surface from the surface on which the cured film has been formed) can be used to create an optical surface. When distortion remains within the lens substrate, deformation sometimes occurred due to potential distortion caused by CG processing. The CG-processed back surface is subjected to polishing to obtain a mirror finish. The polishing treatment generally differs with each processed shape. Accordingly, when the lens substrate deformed due to the heat treatment and the surface shape ended up changing, it was required to change the polishing conditions. In contrast, since lens substrate deformation can be prevented and distortion can be removed in the present invention as set forth above, these problems that have conventionally occurred in a lens substrate in the form of a semifinished lens substrate can be avoided.

The present invention can yield a high-quality plastic lens in which internal distortion is eliminated in both the substrate and cured film and in which deformation of the lens substrate is prevented. The manufacturing method of the present invention is suitable as a method for manufacturing plastic lenses for use as optical lenses of which a high degree of optical characteristics is required, particularly eyeglass lenses.

### [Reference Aspect A]

Application of the above-described method of supporting the plastic lens during heat treatments that is suitably applied to the present invention is not limited to the method of manufacturing a plastic lens of the present invention.

The method of manufacturing a plastic lens employing the above support method (Reference Aspect A) is a method of manufacturing a plastic lens comprising subjecting a plastic lens to a heat treatment while supporting the plastic lens with a support member, the plastic lens being molded into a lens shape comprised of a pair of opposing surfaces and an edge surface running around a rim of the pair of surfaces, characterized in that
the supporting is conducted by supporting, with the support member, the edge surface of the plastic lens positioned with one of the pair of opposing surfaces facing downward, and
the supported edge surface of the plastic lens is a tapered surface with a reverse-tapered shape with respect to the surface positioned facing downward.

The supporting may be conducted in a state where the surface positioned facing downward does not contact the support member.

The tapered surface may form a part of a lateral surface of a cone sharing a common vertex.

Both of the pair of opposing surfaces may have a noncentrosymmetric surface shape.

Among the pair of opposing surfaces, one may be an optical surface and the other may be a non-optical surface, and the surface positioned facing downward may be the optical surface.

The surface positioned facing downward may comprise a progressive surface or an aspherical surface comprising a progressive element.

Among the pair of opposing surfaces, one may be a convex surface and the other may be a concave surface, and the surface positioned facing downward may be the convex surface.

The support member may be a ring-shaped member having on its inner circumference a surface into which the edge surface of the plastic lens fits, and the supporting may be conducted by fitting the edge surface of the plastic lens into the surface.

One of the pair of surfaces may comprise a coating film and/or vapor-deposited film, and the surface comprising the above film may be positioned facing downward in the supporting.

The above heat treatment may comprise heating the plastic lens to a temperature greater than or equal to a glass transition temperature of plastic constituting the lens.

Plastic lenses are generally manufactured by casting polymerization methods and injection molding methods. A heat treatment is normally conducted before or after forming hardcoat films, antireflective films, photochromic films, and other coating films and vapor-deposited films on a plastic lens that has been molded into the shape of a lens. The heat treatment is conducted to remove distortion within the lens, to promote curing of unreacted monomer, to cure the coating, and the like.

The heat treatment is generally conducted with the lens mounted on a carrying base, with the lower surface of the lens being held by a round holding ring or a carrying surface (for example, see the Specification of Japanese Patent No. 2,783,499, Japanese Unexamined Patent Publication (KOKAI) No. 2001-232691, and the Specifications of Japanese Patent Nos. 3,428,062, and 2,909,573). Since the lens can be stably supported during the heat treatment in this manner, the heating treatment can be conducted while maintaining the shape of the lens, even when heating to a temperature at which the lens tends to deform (for example, a temperature greater than or equal to the glass transition temperature).

In a conventional eyeglass lens, at least one surface is designed to have a centrosymmetric shape, such as a spherical shape, or a round shape where the rim edge portions form a circle within a single plane. This is to permit stable mounting during the above heat treatment. However, this imposes a major limitation on eyeglass lens design. By contrast, Reference Aspect A can make it possible to provide a high-quality plastic lens by stably mounting the lens during heat treatment regardless of the shape of the lens. Reference Aspect A can broaden the range of lens shapes that can be selected in lens design (optical design) and make it possible to impart desired optical properties to both surfaces of a lens.

### Reference Aspect A will be described in greater detail below.

As set forth above, conventional heat treatments are conducted while supporting the lens by having a portion of the lower lens surface (for example, the rim edge portion, or the like) in contact with the lens-carrying base. However, in this method, to stably support the lens, it is required to design the lower lens surface to have a centrosymmetric shape, such as a spherical surface, or to have the rim edge portions forming a circle within a single plane.

Accordingly, in Reference Aspect A, the edge surface of the lens that is subjected to the heat treatment is shaped to comprise a tapered surface with a reverse-tapered shape with respect to the surface that is positioned facing downward (also referred to as the "lower lens surface" or "lower surface" hereinafter) during the heat treatment. Thus, it becomes possible to support the lens with the edge surface during the heat treatment, making it possible to freely design both lens surfaces to have desired shapes.

### Lens molding

The lens that is subjected to a heat treatment in Reference Aspect A is a plastic lens that is molded into a lens shape comprised of a pair of opposite surfaces and an edge surface running around the rim of this pair of surfaces. The edge surface is shaped to comprise a tapered surface with a reverse-tapered shape with respect to the surface that is positioned facing downward during the heat treatment. Such a plastic lens can be obtained, for example, by using a known molding method such as a casting polymerization method or injection molding method to process plastic into the shape of a lens, and then processing the edge surface into a taper. The details are as set forth above. Fig. 1 shows an example of how the plastic lens thus obtained is mounted on a support member.

The various materials commonly employed as plastic lens materials can be employed as the plastic material constituting the plastic lens that is subjected to a heat treatment in Reference Aspect A. Examples of plastic lens materials are copolymers of methyl methacrylate and one or more other monomers, copolymers of diethylene glycol bisallyl carbonate and one or more other monomers, copolymers of polyurethane and polyurea, polycarbonate, polystyrene, polyvinyl chloride, unsaturated polyester, polyethylene terephthalate, polyurethane, polythiourethane, sulfide resins employing ene-thiol reactions, polymers of epithio compounds, and sulfur-containing vinyl polymers. Of these, due to the great change in the elastic modulus of polyurethane near the glass transition temperature Tg, there is a risk of imparting a change to the shape if it is not stably supported during heat treatment at or above the glass transition temperature. However, the heat treatment of the lens can be conducted while stably supporting it according to Reference Aspect A. Thus, Reference Aspect A is suitably applied to polyurethane lenses. Polyurethane lenses can be obtained, for example, by polymerizing polyisocyanate, polyol, and/or polythiol. Further, based on the objective, a third component can be added to these polyurethane materials. For specifics on polyurethane lens, reference can be made to Japanese Unexamined Patent Publication (KOKAI) Showa No. 63-46213, Japanese Unexamined Patent Publication (KOKAI) Heisei No. 3-284715, and the like. Plastic lenses can be molded by known methods such as casting polymerization and injection molding.

As shown by way of example in Fig. 1, the lens that is heat treated is positioned with one of its opposing surfaces facing downward. There is no risk of foreign matter adhering to the lower lens surface that is positioned facing downward during the heat treatment due to foreign matter falling from the inner walls of the heating furnace. Thus, the surface to which the adhesion of foreign matter is to be prevented is desirably positioned facing downward. For example, in the case of a semifinished lens in which one surface is an optical surface and the other surface is a non-optical surface, following acceptance of order, the non-optical surface is subjected to grinding and polishing processing to provide a lens product. With such a semifinished lens, positioning the optical surface so that it faces downward can prevent the optical surface from being contaminated by foreign matter during the heat treatment. With a meniscus lens, if the concave surface is positioned facing upward and an object larger than the lens drops from above, the falling object will initially come into contact with the edge portion, thereby preventing the center portion of the concave surface from being damaged by the falling object. Conversely, if the convex surface is positioned facing upward and an object drops from above, the center portion of the lens will end up being damaged. If the portion that is damaged in this manner is the edge portion, the damaged portion can be readily removed by grinding or the like. However, when the center portion is damaged, it becomes difficult to ship it as a finished product. Thus, particularly for a meniscus lens in the form of a finished lens both surfaces of which are optical surfaces, it is desirable to position the convex surface facing downward.

In the lens that is heat treated in Reference Aspect A, both surfaces may have centrosymmetry (for example, they may be two spherical surfaces), either one of the two may have a surface shape that is noncentrosymmetric, or both of the two surfaces may have shapes that are noncentrosymmetric. Particularly in Reference Aspect A, since the edge surface of a lens having two surfaces with surface shapes that are not noncentrosymmetric can be supported by the support member to stably hold the lens and conduct the heat treatment, Reference Aspect A is suitably applied as a method of manufacturing such lenses.

In Reference Aspect A, when a heat treatment is conducted after forming a hardcoat film, antireflective film, photochromic film, other coating film or vapor -deposited film on either one of the two surfaces, the surface on which the coating film has been formed is desirably positioned facing downward. This can prevent foreign matter from adhering to the film that is positioned on the outermost surface of the lens, as set forth above. Further, in Reference Aspect A, since the edge surface is supported during the heat treatment, the heat treatment can be conducted with the lower lens surface in a state of non-contact with the support member. This is advantageous, for example, when the coating film tends to be damaged by contact with the support member, such as when conducting the heat treatment with the coating film in a partially cured state. When the uncured film and support member come into contact, not only does the smoothness of the film diminish, but a portion of the film is sometimes damaged in the course of removing the lens from the support member following the heat treatment, or a potential decrease in adhesion sometimes results. In the method of conducting the heat treatment while supporting the rim of the lower lens surface, the coating film is pressed by the support member along the rim, sometimes reducing the thickness of this portion. Reducing the thickness of part of the film in this manner may cause a decrease in the adhesion of the film and the lens. In particular, when adhesion decreases along the rim of the lower lens surface, the film tends to peel off, resulting in reduced adhesion of the entire film. By contrast, Reference Aspect A can permit supporting the lens with the lower lens surface and the support member in a state of non-contact, thereby permitting heat treatment free of these problems. In the heat treatment, the upper surface of the lens is normally in a state of non-contact with the support member. Further, coating films and vapor-deposited films can be formed by known methods. In Reference Aspect A, it is not necessary for the lower lens surface and the support member to be in a state of non-contact during the heat treatment; for example, when no coating film has been formed on the lower surface, there are times when more stable support can be afforded by having a portion of the lower lens surface contact the support member.

Other details regarding the lens that is subjected to the heat treatment and the method of supporting the lens in Reference Aspect A are as set forth above in the description of the method of manufacturing a plastic lens of the present invention.

### Heat treatment

The plastic lens is subjected to a heat treatment with the edge surface supported by the support member. As set forth above, Reference Aspect A is suited to cases including heat treatment involving heating to or above the glass transition temperature of the plastic constituting the plastic lens. However, such heat treatments are not limited to being conducted at a temperature at or above the glass transition temperature of the plastic constituting the lens; Reference Aspect A is suitable as a method of manufacturing plastic lenses comprising a heat treatment involving heating to a temperature lower than the glass transition temperature. The heat treatment in Reference Aspect A can be any heat treatment to cure unreacted monomer within the lens, promote polymerization of the lens, remove distortion within the lens by slow cooling (annealing), cure a coating film applied to the lens surface, conduct preprocessing in the course of forming a vapor-deposited film on a coating film, or the like. It suffices to suitably set the heating conditions based on the objective. These heat treatments can be conducted, for example, in a heating furnace using heat, ultraviolet radiation, infrared radiation, an electron beam, microwaves, or the like. For example, when annealing a polyurethane lens, the heating temperature can be set to about 20 to 130°C and the heating time can be set to about 1 to 12 hours.

The tapered surface of the edge of the plastic lens that has been subjected to the heat treatment while being supported by the support member is normally removed by grinding, polishing, or the like following the heat treatment. However, use without removing the tapered surface is possible in some applications.

Reference Aspect A can provide a high-quality plastic lens without causing shape change due to the heat treatment. The manufacturing method of the present invention is particularly suitable as a method of manufacturing eyeglass lenses of which high optical characteristics are demanded.

### [Reference Aspect B]

Application of the above-described method of improving adhesion including surface treatment and the use of a coupling agent that are applicable to the present invention is not limited to the method of manufacturing a plastic lens of the present invention.

The method of manufacturing a plastic lens employing the above method (Reference Aspect B) is a method of manufacturing a plastic lens comprising a coating film on one of a pair of opposing surfaces of a plastic lens substrate comprising:
at least subjecting one of a pair of opposing surfaces of the plastic lens substrate to at least one surface treatment selected from the group consisting of a surface cleaning treatment, a surface activation treatment, a surface area increasing treatment, and a surface coating application treatment;
coating a coating liquid comprising a coupling agent on the surface on which the surface treatment has been subjected to form a coating film; and
conducting a heat treatment of the plastic lens on which the coating film has been formed at a temperature lower than a glass transition temperature of the substrate.

The plastic lens substrate prior to the surface treatment may be heat treated at a temperature greater than or equal to the glass transition temperature of the substrate.

The surface treatment may comprise at least one selected from the group consisting of alkali treatment, polishing treatment, exposure to ozone, corona discharge, irradiation with ultraviolet radiation, plasma discharge, coating of a primer layer, and solvent treatment.

The coating liquid may be a photocurable coating liquid, and curing of the coating liquid by irradiation with light may be further comprised following the coating.

The coating liquid may further comprise a photochromic dye.

The coating liquid may further comprise a photo-induced radical polymerization initiator.

The coating film may have a thickness ranging from 10 to 60 µm.

In general, in the plastic lenses that are employed as optical lenses such as eyeglass lenses, a desired refractive index is realized by means of the lens substrate and various properties (photochromic property, antireflective capability, improved durability) are imparted through coating films provided on the substrate (for example, see Japanese Unexamined Patent Publication (KOKAI) No. 2005-246265 or the English language family member EP 1 721 680 A1, and "Megane," Medical-Aoi Publications, Inc., released May 22, 1986, p. 81-83).

Generally, when coating films are formed on both surfaces of a lens substrate, due to balancing of the shrinkage in the coating films on both surfaces, problems such as decreased adhesion and change in the shape of the lens substrate seldom appear. By contrast, when a coating film is formed on just one surface of a lens substrate, the effects of shrinkage of the coating film become pronounced on one surface, and the decrease in adhesion between the coating film and the lens substrate and change in the shape of the substrate following formation of the coating film sometimes greatly affect the properties of the lens product. To prevent change in shape of the lens substrate, it is conceivable to lower the temperature of the heat treatment following coating film formation. Additionally, to enhance adhesion between the lens substrate and the coating film, it is conceivable to heat the entire lens after coating the coating film to form bonds and the like between the polymer components constituting the lens substrate and the components in the coating liquid. However, for some heating temperatures, there may be problems in that the lens substrate is deformed it is difficult to control the surface dioptric power. Additionally, it becomes difficult to achieve an adequate adhesion improving effect when the heating temperature is lowered. Thus, there is a tradeoff between improvement in adhesion and shape maintenance, making it extremely difficult to achieve both.

The present inventors conducted extensive research in this regard, resulting in the following discoveries.

As set forth above, for some temperatures of the heat treatment following coating film formation, deformation of the plastic lens substrate may be caused. Since the fluidity of plastics in particular varies greatly about the boundary of the glass transition temperature, the lens substrate sometimes deforms to the extent that controlling the dioptric power of the lens surface becomes difficult when the heating temperature is greater than or equal to the glass transition temperature of the lens substrate. However, lowering the heating temperature is undesirable from the perspective of adhesion increasing effect. Accordingly, the present inventors conducted further research, discovering that by adding a coupling agent to the coating liquid as an adhesion-enhancing component and subjecting the surface of the lens substrate to a surface treatment prior to coating of the coating liquid, it was possible to compensate for the decrease in the adhesion increasing effect caused by employing a relatively low heating temperature. Reference Aspect B can make it possible to increase adhesion between the lens substrate and the coating film while inhibiting or preventing deformation of the substrate, thereby yielding a high-quality plastic lens.

The above Reference Aspect B will be described in greater detail below.

Reference Aspect B comprises the following steps.

### (Step 1)

At least subjecting one of a pair of opposing surfaces of the plastic lens substrate to a surface treatment.

### (Step 2)

Coating a coating liquid comprising a coupling agent on the surface on which the surface treatment has been subjected to form a coating film.

### (Step 3)

Conducting a heat treatment of the plastic lens on which the coating film has been formed at a temperature lower than a glass transition temperature of the substrate.

Each of the above steps will be sequentially described in detail below.

### (Step 1)

This step is a step in which the surface of the lens substrate on which the coating film is formed (the coated surface) is subjected to a surface treatment. The surface treatment is at least one surface treatment selected from the group consisting of a surface cleaning treatment, a surface activation treatment, a surface area increasing treatment, and a surface coating application treatment. The details thereof are as stated in the description of the method of manufacturing a plastic lens of the present invention above.

The various materials that are commonly employed as plastic lens materials can be employed as the plastic material constituting the plastic lens substrate that is treated in Reference Aspect B. Examples of plastic lens materials are copolymers of methyl methacrylate and one or more other monomers, copolymers of diethylene glycol bisallyl carbonate and one or more other monomers, copolymers of polyurethane and polyurea, polycarbonate, polystyrene, polyvinyl chloride, unsaturated polyester, polyethylene terephthalate, polyurethane, polythiourethane, sulfide resins employing ene-thiol reactions, and sulfur-containing vinyl polymers. Of these, due to the great change in the elastic modulus of polyurethane near the glass transition temperature Tg, it is sometimes difficult to control the surface dioptric power and adhesion sometimes decreases due to deformation of the substrate when heat treating the entire lens at a temperature greater than or equal to the glass transition temperature of polyurethane after forming the coating film. However, in Reference Aspect B, these problems caused by deformation of the substrate can be avoided by conducting the heat treatment of the entire lens following formation of the coating film at a temperature lower than the Tg of the substrate. Thus, Reference Aspect B is suitably applied to polyurethane lenses. Polyurethane lenses can be obtained, for example, by polymerizing polyisocyanate, polyol, and/or polythiol. Further, based on the objective, a third component can be added to these polyurethane materials. For specifics on polyurethane lenses, reference can be made to Japanese Unexamined Patent Publication (KOKAI) Showa No. 63-46213, Japanese Unexamined Patent Publication (KOKAI) Heisei No. 3-284715, and the like. Plastic lenses can be molded by known methods such as casting polymerization and injection molding. The thickness of a plastic lens is generally about 1 to 50 mm at the geometric center thereof. Additional details on the plastic lens substrate that is processed in Reference Aspect B are as set forth in the description of the method of manufacturing a plastic lens of the present invention above.

Regarding the glass transition temperature of the substrate and the glass transition temperature of the coating film (cured film), described further below, the glass transition temperatures of samples for measuring glass transition temperatures are desirably measured ahead of time in preliminary testing to determine manufacturing conditions. For example, although the glass transition temperature of a polyurethane lens will vary depending on whether or not a third component is present and the quantity in which such a component is added, it is generally about 100 to 120°C.

In Reference Aspect B, the glass transition temperature refers to a value that is measured for a lens substrate by a thermomechanical analyzer (TMA) in penetration mode in the same manner as in the method of manufacturing a plastic lens of the present invention. Additionally, the glass transition temperature of a coating film refers to the temperature at which the ratio E'/E" (tan δ) of the storage modulus of elasticity E' to the loss modulus of elasticity E", which are obtained by dynamic viscoelasticity, peaks.

Optical distortion sometimes remains in the interior of the lens substrate, compromising the optical characteristics of the lens product. Accordingly, in Reference Aspect B, it is desirable to reduce or eliminate distortion in the interior of the substrate by heat treating the lens substrate prior to coating film formation. The heat treatment for this purpose is desirably conducted at a temperature greater than or equal to the glass transition temperature of the lens substrate. It is also desirable to subject the lens substrate to the above heat treatment before the above surface treatment to render the above surface treatment effective.

When heating the lens substrate, particularly when the shape of the lens surface is noncentrosymmetric, and the like, it is desirable to employ a method of support where the edge surface of the lens substrate is supported by the support member, with application of Reference Aspect A being preferred, in the course of positioning the substrate on the support member with one of the pair of opposing surfaces of the lens substrate facing downward. The heat treatment in Step 3, described further below, is also desirably conducted while supporting the lens with Reference Aspect A. In that case, the surface on which the coating film has been formed is desirably positioned facing downward. Thus, as set forth above, adhesion of foreign matter to the film positioned on the outermost surface of the lens can be avoided. However, in Reference Aspect B, it is also possible to support the lens substrate by a known method such as the method described in the Specification of Japanese Patent No. 2,783,499.

It suffices to heat the lens substrate to a temperature greater than or equal to the glass transition temperature Tg of the substrate, desirably a temperature greater than or equal to Tg but approximately less than or equal to Tg + 10°C, approximately for a period permitting elimination of distortion within the substrate. For example, once the temperature of the surface of the lens substrate has reached a set temperature, this temperature can be maintained for about 30 to 120 minutes. The rate at which the temperature is increased to the set temperature is not specifically limited; however, it should be determined by taking into account the thermal characteristics of the plastic material constituting the lens substrate. For example, a rate of 1.3 to 1.7°C/minute can be employed. The lens substrate can be cooled by allowing it to cool on its own following the heat treatment. However, since the heat history during cooling may also affect lens characteristics, an annealing furnace or the like is desirably employed to control the cooling rate. A cooling rate of about 2 to 5°C/minute can be employed, for example. The heat treatment can be conducted in a heating furnace, for example, with heat, ultraviolet radiation, infrared radiation, an electron beam, microwaves, or the like.

### Step 2

In this step, a coating film is formed by coating a coating liquid comprising a coupling agent on the surface of the substrate that has been subjected to the above surface treatment. Subjecting the coated surface of the lens substrate to a surface treatment as set forth above in addition to adding a coupling agent to the coating liquid that is coated on the surface of the lens substrate can make it possible to obtain a lens affording good adhesion between the coating film and the substrate even when the heat treatment is conducted at a relatively low temperature below the Tg of the substrate, as will be described further below.

The above coating liquid can be a thermosetting composition that is curable by heat polymerization, or a photocurable composition that is curable by photopolymerization. To effectively prevent deformation of the substrate by heating, a photocurable composition that does not require a heat treatment to undergo a curing reaction is desirably employed as the coating liquid. The coating liquid is coated on one of the surfaces of the lens substrate.

Examples of photocurable compositions are coating liquids (photochromic liquids) for forming functional films imparting photochromic properties to the lens, generally known as photochromic films or light-regulating films. Since photochromic films are generally thick, adhesion to the substrate tends to be low due to contraction during polymerization. When the curing reaction is conducted by photopolymerization, particularly radical polymerization, the polymerization reaction tends to progress rapidly and the coating film tends to contract sharply, tending to reduce adhesion. By contrast, in Reference Aspect B, adhesion between the lens substrate and the coating film can be increased by employing a coupling agent and by treating the surface of the substrate (coated surface). Thus, Reference Aspect B is suitable as a method of manufacturing plastic lenses having cured films in the form of photochromic films.

The photochromic liquid comprises at least a photochromic dye and a photocurable component, and may optionally comprise a polymerization initiator and additives. The details thereof are as set forth above in the description of the method of manufacturing a plastic lens of the present invention. The details of the coupling agent are also as set forth above in the description of the method of manufacturing a plastic lens of the present invention.

In Reference Aspect B, the coating liquid can be coated on the surface of the lens substrate by a known method such as spin coating or dipping. Additional details regarding the coating film and how it is formed in Reference Aspect B are as set forth above in the description of the method of manufacturing a plastic lens of the present invention.

### Step 3

This step is a step in which the entire lens on which a coating film has been formed in Step 2 is subjected to a heat treatment. This heat treatment has the effect of increasing adhesion between the lens substrate and the coating film. In the present invention, this heat treatment is conducted at a relatively low temperature below the Tg of the substrate. However, by employing a coupling agent and a surface treatment as set forth above, adhesion between the lens substrate and the coating film can be effectively increased despite a relatively low heating temperature. It is also possible to prevent deformation of the substrate by the heat treatment by conducting the heat treatment at a temperature lower than the glass transition temperature of the substrate.

The temperature during the heat treatment need only be lower than the glass transition temperature of the substrate. However, as in the method of manufacturing a plastic lens of the present invention, the heat treatment is desirably conducted at a temperature that is greater than or equal to the glass transition temperature of the coating film. One desirable embodiment of this step is the same as the fourth step in the method of manufacturing a plastic lens of the present invention.

After Step 3, the lens substrate can be shipped as is as a lens product, or further provided with a hardcoat film, antireflective film, or the like. When forming a functional film on the above coating film, it is desirable not to conduct a heat treatment at a temperature greater than or equal to the Tg of the substrate so as to prevent deformation of the lens substrate. It is also desirable not to conduct a heat treatment at a temperature greater than or equal to the Tg of the coating film so as to prevent deformation of the coating film. However, since there is solid adhesion of the coating film and the lens substrate following Step 3, in the course of forming a functional film on the coating film following Step 3, adhesion can be maintained even when conducting a heat treatment at a temperature of greater than or equal to the Tg of the lens substrate. Further, when the edge surface of the lens substrate has been tapered as set forth above, the tapered surface is normally removed by grinding, polishing, or the like prior to shipping the finished product. However, use without removing the tapered surface is possible in some applications.

Reference Aspect B can yield a high-quality plastic lens affording good adhesion between the substrate and the coating film in which deformation of the lens substrate is prevented. Reference Aspect B is suitable as a method of manufacturing optical lenses of which a high degree of optical characteristics is required, particularly eyeglass lenses in the form of plastic lenses.

### EXAMPLES

The present invention is further described below through Examples. However, the present invention is not limited to the embodiments shown in the Examples.

### [Example 1]

### 1. Manufacturing of lens substrate

The plastic lens substrate shown in the lower drawing of Fig. 1 was molded by the following method:
After mixing and thoroughly stirring 484 mass parts of m-xylene diisocyanate, 305 mass parts of pentaerythritol tetrakis 3-mercaptopropionate, 90 mass parts of monothioglycerol, 0.3 mass part of dibutyltin laurate, and 0.5 mass part of an ultraviolet radiation absorbing agent in the form of 2-(2'-hydroxy-5'-t-octylphenyl)benzotriazole, the mixture was degassed for 60 minutes under a vacuum of 1 mmHg.

Next, upper/lower glass lens molds (outer diameter 68.5 mm) were prepared to obtain a double-aspherical-surface progressive dioptric power lens based on a prescription for a far dioptric power of +3.00 (D), astigmatic dioptric power of +1.00 (D), addition dioptric power of +1.00 (D), progressive band length of 11 mm indicating the distance between the far dioptric power measurement position and the addition dioptric power measurement position, outer lens diameter of 60 Φ, and center thickness of 4.2 mm. The lens molds were assembled with a resin gasket into a lens casting mold. The above-described mixed liquid was cast into the casting mold. The temperature was continuously raised from 25 to 120°C over 20 hours, and then maintained for 2 hours at 120°C to conduct polymerization and mold a lens. The gasket was removed, a wedge was driven between the lower mold and the molded lens to separate the two, the upper mold was peeled away from the lens, and the polyurethane lens was removed. The rim portion of the lens that had been removed was processed by cutting to reduce the outer diameter thereof from about 68.55 mm to 60 mm. In this process, the taper structure shown in the lower drawing of Fig. 1 was formed in the edge surface of the lens. This tapered shape was equivalent to the lateral surface of an imaginary cone having a vertex on a straight line in the direction of a normal line extending from the geometric center of the lens, with the angle formed with the normal line direction extending from the geometric center of the lens being 45°. The angle of the tapered shape widened in the direction in which the concave side of the lens (eyeball side) widened, with the vertex of the imaginary cone being positioned on the convex surface side (object side) of the lens.

### 2. Measurement of the glass transition temperature of the lens substrate

A lens substrate for measuring the glass transition temperature was fabricated by the same method as in 1. above. Measurement of the glass transition temperature of the lens substrate with a thermomechanical analyzer (TMA) in penetration mode revealed a value of 100°C.

### 3. First heating step (first step)

Next, the lens substrate obtained in 1. above was positioned on the lens supporting device shown in the lower drawing of Fig. 1 (with the lower lens surface and the supporting device in a state of non-contact) for the first step. The lens supporting device was made of an aluminum alloy and the inner diameter of the concave lens receiving part was 63 to 70 Φ. The incline of the tapered surface of the lens-carrying part was 45° relative to horizontal. While monitoring with a thermocouple the temperature within the heating furnace and the temperature of the convex surface of the lens substrate while thus supported, the temperature within the heating furnace was increased from room temperature (24°C) to a target temperature of 110°C over 60 minutes (at about 1.4°C/min). Once the surface temperature of the lens had reached 110°C, a heat treatment was conducted by maintaining this temperature for 100 minutes. When the heat treatment ended, cooling was conducted to room temperature at an annealing rate of 2.87°C/minute.

### 4. Forming a photochromic film (second and third steps)

To 100 mass parts of radical polymerizable monomers comprised of 20 mass parts of trimethylolpropane trimethacrylate, 35 mass parts of BPE oligomer (2,2-bis(4-methacryloyloxypolyethoxyphenyl)propane), 10 mass parts of EB6A (polyester oligomer hexaacrylate), 10 mass parts of polyethyleneglycol diacrylate with an average molecular weight of 532, and 10 mass parts of glycidyl methacrylate were added 3 mass parts of photochromic dye in the form of the chromene 1 described below, 5 mass parts of oxidation inhibitors in the form of LS765 (bis(1,2,2,6,6-pentamethyl-4-piperidyl)sebacate and methyl(1,2,2,6,6-pentamethyl-4-piperidyl)sebacate), and ultraviolet radiation polymerization initiators in the form of 0.4 mass part of CGI-184 (1-hydroxychlorohexyl phenyl ketone) and 0.1 mass part of CGI-403 (bis(2,6-dimethoxybenzoyl-2,4,4-trimethylpentylphosphineoxide) in a plastic container. To the liquid, an adhesive in the form of 4.8 mass parts of an organic silicon compound having epoxy groups (γ-glycidoxypropyltrimethoxysilane) and an organic silicon compound having radical polymerizable functional groups in the form of 1.6 mass parts of γ-methacryloyloxypropyltrimethoxysilane were added dropwise with stirring. After thorough stirring, 1.4 mass parts of N-methyldiethanolamine were weighed out and added dropwise, and the mixture was thoroughly stirred anew. Subsequently, 0.1 mass part of a silicone-based leveling agent in the form of Y-7006 (polyoxyalkylene dimethylpolysiloxane copolymer) was admixed, and then degassing was conducted for 2 minutes in a rotating and revolving-type stirring and degassing device. The viscosity of the liquid thus obtained was 140 mPa·s.

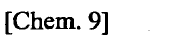

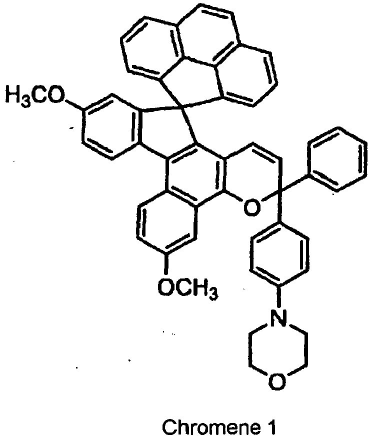

The lens substrate that had been heat treated in 1. above was immersed for 5 minutes in a 10 mass percent sodium hydroxide aqueous solution at 60°C, thoroughly washed with pure water, and dried. The prepared photochromic liquid was then coated on the convex surface side of the substrate by spin-coating.

Subsequently, the lens was irradiated with light from the convex surface side using a UV lamp (wavelength 150 to 380 nm) in a nitrogen atmosphere to cure the photochromic film. The irradiation distance was 330 mm and the irradiation period was 165 seconds. Measurement revealed the cured film to be 30 micrometers in thickness.

### 4. Measurement of the glass transition temperature of the photochromic film

A lens sample with a photochromic film formed on the lens substrate was prepared by the same method as above. Measurement by the method described below revealed the glass transition temperature of the photochromic film on the sample to be about 55 to 60°C.

The storage modulus of elasticity (elasticity) and the loss modulus of elasticity (viscosity) were measured with a dynamic viscoelasticity measuring device, the ratio of the loss modulus of elasticity (viscosity)/storage modulus of elasticity (elasticity) was calculated, and the temperature at which this ratio peaked was specified as the Tg.

### 5. Second heating step (fourth step)

While monitoring with a thermocouple the temperature on the surface of the cured film and the temperature within the heating furnace in a state where the lens on which the cured film had been formed was mounted on a support member with the cured film facing downward in the same manner as in the first heating step, the temperature within the heating furnace was increased from room temperature (24°C) to a target temperature of 80°C over 60 minutes (about 0.9°C/minute). Once the surface temperature of the cured film had reached 80°C, this temperature was maintained for 120 minutes to conduct a heat treatment. When the heat treatment had been completed, cooling to room temperature was conducted at an annealing rate of 2.87°C/minute.

The optical characteristics of the photochromic lens thus obtained were evaluated with a Focovision made by LOH, revealing no internal distortion and excellent optical characteristics. Deformation of the lens substrate was evaluated with a Focovision made by LOH, revealing a value within ± 0.03 D as converted to a dioptric power; no deformation substantial enough to affect the surface dioptric power was observed.

Evaluation of the adhesion between the lens substrate and photochromic film by crosshatch test revealed good results of 100/100.

### [Comparative Example 1]

A photochromic lens was fabricated by the same method as in Example 1 with the exceptions that no heat treatment was conducted prior to forming the cured film in Example 1; after forming the cured film, the temperature was increased from room temperature (24°C) to a target temperature of 110°C over 60 minutes (about 1.4°C/min) with the entire lens in a heating furnace; when the temperature of the lens surface (cured film surface) had reached 110°C, this temperature was maintained for 100 minutes to conduct a heat treatment; and when the heat treatment had concluded, the temperature was cooled to room temperature at an annealing rate of 2.87°C/minute.

Deformation of the lens substrate of the lens obtained was evaluated with a Focovision made by LOH, revealing that substantial deformation of ± 0.14 D (absolute value of average value: 0.09 D) as converted to a dioptric power had been generated.

[Examples 2 and 3, Comparative Examples 2 and 3 (Aspect I, Reference Aspect B)]

### 1. Fabrication of a lens substrate

Plastic lens substrates (with glass transition temperatures of 100°C) shown in the lower drawing of Fig. 1 were molded by the same method as in Example 1.

### 2. First heating step

Next, the lens substrate obtained in 1. above was positioned on the lens supporting device shown in the lower drawing of Fig. 1 (with the lower lens surface and the supporting device in a state of non-contact). The lens supporting device was made of aluminum alloy and the inner diameter of the concave lens receiving part was 63 to 70 Φ. The incline of the tapered surface of the lens-carrying part was 45° relative to horizontal. While monitoring with a thermocouple the temperature within the heating furnace and the temperature of the convex surface of the lens substrate while thus supported, the temperature within the heating furnace was increased from room temperature (24°C) to a target temperature of 110°C over 60 minutes (at about 1.4°C/min). Once the surface temperature of the lens had reached 110°C, a heat treatment was conducted by maintaining this temperature for 100 minutes. When the heat treatment had ended, cooling was conducted to room temperature at an annealing rate of 2.87°C/minute.

### 3. Forming a photochromic film

To 100 mass parts of radical polymerizable monomers comprised of 20 mass parts of trimethylolpropane trimethacrylate, 35 mass parts of BPE oligomer (2,2-bis(4-methacryloyloxypolyethoxyphenyl)propane), 10 mass parts of EB6A (polyester oligomer hexaacrylate), 10 mass parts of polyethyleneglycol diacrylate with an average molecular weight of 532, and 10 mass parts of glycidyl methacrylate were added 3 mass parts of photochromic dye in the form of the chromene 1 employed in Example 1, 5 mass parts of oxidation inhibitors in the form of LS765 (bis(1,2,2,6,6-pentamethyl-4-piperidyl)sebacate and methyl(1,2,2,6,6-pentamethyl-4-piperidyl)sebacate), and ultraviolet radiation polymerization initiators in the form of 0.4 mass part of CGI-184 (1-hydroxychlorohexyl phenyl ketone) and 0.1 mass part of CGI-403 (bis(2,6-dimethoxybenzoyl-2,4,4-trimethylpentylphosphineoxide) in a plastic container. To the liquid, a silane coupling agent in the form of 4.8 mass parts of an organic silicon compound having epoxy groups (γ-glycidoxypropyltrimethoxysilane) and an organic silicon compound having radical polymerizable functional groups in the form of 1.6 mass parts of γ-methacryloyloxypropyltrimethoxysilane were added dropwise with stirring. After thorough stirring, 1.4 mass parts of N-methyldiethanolamine were weighed out and added dropwise, and the mixture was thoroughly stirred anew. Subsequently, 0.1 mass part of a silicone-based leveling agent (polyoxyalkylene dimethylpolysiloxane copolymer) was admixed, and then degassing was conducted for 2 minutes in a rotating and revolving-type stirring and degassing device. The viscosity of the liquid thus obtained was 140 mPa·s.

The lens substrate that had been heat treated in 1. above was immersed for 5 minutes in a 10 mass percent sodium hydroxide aqueous solution at 60°C, thoroughly washed with pure water, and dried. Next, the convex surface of the lens substrate and a polishing pad were caused to slide in rotating fashion against each other to conduct a polishing treatment. The rotational speed at this treatment was about 400 to 600 rpm. Simultaneously, the polishing pad was made to swing in the direction of the principal meridians of the eyeglass lens. This swinging of the polishing pad was conducted in a cycle of about once per second. The polishing pad employed was a sheet about 1 mm in thickness of a material such as foam polyurethane, felt, nonwoven cloth, some other fibrous cloth, or synthetic resin. After polishing, the prepared photochromic liquid was coated on the convex surface side of the substrate by spin-coating.

Subsequently, the lens was irradiated with light from the convex surface side using a UV lamp (wavelength 150 to 380 nm) made by Toshiba Lighting & Technology Corporation in a nitrogen atmosphere to cure the photochromic film. The irradiation distance was 330 mm and the irradiation period was 165 seconds. Measurement revealed the cured film to be 30 micrometers in thickness.

### 4. Measurement of the glass transition temperature of the photochromic film

A lens sample with a photochromic film formed on the lens substrate was prepared by the same method as above. Measurement by the method described below revealed the glass transition temperature of the photochromic film on the sample to be about 55 to 60°C.

The storage modulus of elasticity (elasticity) and the loss modulus of elasticity (viscosity) were measured with a dynamic viscoelasticity measuring device, the ratio of the loss modulus of elasticity (viscosity)/storage modulus of elasticity (elasticity) was calculated, and the temperature at which this ratio peaked was specified as the Tg.

### 5. Second heating step

While monitoring with a thermocouple the temperature on the surface of the cured film and the temperature within the heating furnace in a state where the lens on which the cured film had been formed was mounted on a support member with the cured film facing downward in the same manner as in the first heating step, the temperature within the heating furnace was increased from room temperature (24°C) to the target temperature shown in Table 1 over 30 minutes. Once the surface temperature of the cured film had reached the target temperature, this temperature was maintained for 60 minutes to conduct a heat treatment. When the heat treatment had been completed, cooling to room temperature was conducted at an annealing rate of 2.87°C/minute.

The optical characteristics of the photochromic lenses obtained in Example 2 and 3 and in Comparative Examples 2 and 3 were evaluated with a Focovision made by LOH, revealing no internal distortion and excellent optical characteristics in all lenses. The results of evaluation of deformation of the lens substrates with a Focovision made by LOH and results of evaluation of adhesion of the lens substrate and the photochromic film by crosshatch testing are given in Table 1.

**[Table 1]**

| | Alkali treatment | Surface treatment | Temperature of heat treatment following formation of cured film | Change in shape | Adhesion |
|---|---|---|---|---|---|
| Ex. 2 | Conducted | Conducted | 80°C | -0.00 | 95-99.9/100 |
| Ex. 3 | Conducted | Conducted | 90°C | -0.03 | 100/100 |
| Comp. Ex.2 | Conducted | Conducted | 100°C | -0.14 | 100/100 |
| Comp. Ex.3 | Conducted | Conducted | 110°C | -0.14 | 100/100 |

| | | | | | |
|---|---|---|---|---|---|
| (Glass transition temperature of lens substrate: 100 °C) | | | | | |

As shown in Table 1, although Examples 2 and 3 and Comparative Examples 2 and 3 exhibited good adhesion between the lens substrate and the cured film, changes in shape of a degree substantially affecting the surface dioptric power were observed in Comparative Examples 2 and 3. This was attributed to substantial change in the lens substrate due to conducting the heat treatment at a temperature greater than or equal to the glass transition temperature of the lens substrate.

### [Example 4, Comparative Example 4 (Aspect I, Reference Aspect B)]

### 1. Fabrication of lens substrates

With the exception that the formula of the lens starting material liquid was changed, lens substrates were fabricated by the same method as in Example 1.

### 2. Measurement of the glass transition temperature of the lens substrate

A lens substrate for measuring the glass transition temperature was fabricated by the same method as in 1. above. Measurement of the glass transition temperature of the lens substrate with a thermomechanical analyzer (TMA) in penetration mode revealed a value of 118°C.

### 3. First heating step

Next, the lens substrate obtained in 1. above was positioned on the lens supporting device shown in the lower drawing of Fig. 1 (with the lower lens surface and the supporting device in a state of non-contact). The lens supporting device was made of an aluminum alloy and the inner diameter of the concave lens receiving part was 63 to 70 Φ. The incline of the tapered surface of the lens-carrying part was 45° relative to horizontal. While monitoring with a thermocouple the temperature within the heating furnace and the temperature of the convex surface of the lens substrate while thus supported, the temperature within the heating furnace was increased from room temperature (24°C) to a target temperature of 120°C over 60 minutes (at about 1.6°C/min). Once the surface temperature of the lens had reached 118°C, a heat treatment was conducted by maintaining this temperature for 100 minutes. When the heat treatment had ended, cooling was conducted to room temperature at an annealing rate of 2.87°C/minute.

### 4. Forming a photochromic film

The lens substrate that had been heat treated in 1. above was immersed for 5 minutes in a 10 mass percent sodium hydroxide aqueous solution at 60°C, thoroughly washed with pure water, and dried. A photochromic liquid prepared by the same method as that set forth above was then coated on the convex surface side of the substrate by spin-coating.

Subsequently, the lens was irradiated with light from the convex surface side using a UV lamp (wavelength 150 to 380 nm) in a nitrogen atmosphere to cure the photochromic film. The irradiation distance was 330 mm and the irradiation period was 165 seconds. Measurement revealed the cured film to be 30 micrometers in thickness. Measurement of the glass transition temperature of the cured film by the same method as above revealed a value of about 55 to 60°C.

### 5. Second heating step

While monitoring with a thermocouple the temperature of the cured film and the temperature within the heating furnace in a state where the lens on which the cured film had been formed was positioned on a support member with the cured film facing downward in the same manner as in the first heating step, the temperature within the heating furnace was increased from room temperature (24°C) to the target temperature shown in Table 2 over 30 minutes. Once the surface temperature of the cured film had reached the target temperature, this temperature was maintained for 60 minutes to conduct a heat treatment. When the heat treatment had been completed, cooling to room temperature was conducted at an annealing rate of 2.87°C/minute.

The optical characteristics of the photochromic lenses obtained in Example 4 and in Comparative Example 4 were evaluated with a Focovision made by LOH, revealing no internal distortion and excellent optical characteristics in all lenses. The results of evaluation of deformation of the lens substrate with a Focovision made by LOH and results of evaluation of adhesion of the lens substrate and the photochromic film by crosshatch testing are given in Table 2.

**[Table 2]**

| | Alkali treatment | Surface treatment | Temperature of heat treatment following formation of cured film | Change in shape | Adhesion |
|---|---|---|---|---|---|
| Ex. 4 | Conducted | Not conducted | 110°C | -0.03 | 100/100 |
| Comp. Ex. 4 | Conducted | Not conducted | 120°C | -0.09 | 100/100 |

| | | | | | |
|---|---|---|---|---|---|
| (Glass transition temperature of lens substrate: 118 °C) | | | | | |

As shown in Table 1, although Example 4 and Comparative Example 4 exhibited good adhesion between the lens substrate and the cured film, change in shape of a degree substantially affecting the surface dioptric power was observed in Comparative Example 4. This was attributed to substantial change in the lens substrate due to conducting the heat treatment at a temperature greater than or equal to the glass transition temperature of the lens substrate.

Aspect I and Reference Aspect B are suitable as methods of manufacturing eyeglass lenses having functional films such as photochromic films.

### [Reference Example 1 (Reference Aspect A)]

A plastic lens of the shape shown in the upper drawing of Fig. 1 was molded by the following method.

One hundred mass parts of m-xylene diisocyanate, 142 mass parts of - pentaerythritol tetrakis 3-mercaptopropionate, 6 mass parts of di-n-butyl phosphate, 0.25 mass part of dibutyltin laurate, and 0.5 mass part of ultraviolet radiation absorbing agent in the form of 2-(2'-hydroxy-5'-t-octylphenyl)benzotriazole were mixed, thoroughly stirred, and degassed for 60 minutes under a vacuum of 1 mmHg.

Next, upper/lower glass lens molds (outer diameter 73.5 mm) were prepared to obtain a double-aspherical-surface progressive dioptric power lens based on a prescription for a far dioptric power of +3.00 (D), astigmatic dioptric power of +1.00 (D), addition dioptric power of +1.00 (D), progressive band length of 11 mm indicating the distance between the far dioptric power measurement position and the addition dioptric power measurement position, outer lens diameter of 65 Φ, and center thickness of 5.6 mm. The lens molds were assembled with a tape-type resin gasket into a lens casting mold. The above-described mixed liquid was cast into the casting mold. The temperature was continuously raised from 25 to 120°C over 20 hours, and then maintained for 2 hours at 120°C to conduct polymerization. The tape was removed, a wedge was driven between the lower mold and the molded lens to separate the two, the upper mold was peeled away from the lens, and the lens was removed. The rim portion of the lens that had been removed was processed by cutting to reduce the outer diameter thereof from about 73.5 mm to 65 mm. In this process, the taper structure shown in the upper drawing of Fig. 1 was formed in the edge surface of the lens. This tapered shape was equivalent to the lateral surface of an imaginary cone having a vertex on a straight line in the direction of a normal line extending from the geometric center of the lens, with the angle formed with the normal line direction extending from the geometric center of the lens being 0.01°. The angle of the tapered shape widened in the direction in which the concave side of the lens (eyeball side) widened, with the vertex of the imaginary cone being positioned on the convex surface side (object side) of the lens.

Next, for an annealing step, the lens obtained was positioned on the lens supporting device shown in the upper drawing of Fig. 1 (with the convex portion of the lower lens surface in contact with the supporting device). The lens supporting device was made of an aluminum alloy and the inner diameter of the concave lens receiving part was 63 to 70 Φ. The incline of the tapered surface of the lens-carrying part was 89.99° relative to horizontal. The lens, while thus supported, was annealed under conditions of 20°C to 115°C. Although the heating temperature range included the glass transition temperature (100°C) of the polyurethane constituting the lens, the lens obtained exhibited excellent lens physical properties, free of both optical distortion and deformation caused by the heat treatment.

### [Reference Example 2 (Reference Aspect A)]

The plastic lens shown in the lower drawing of Fig. 1 was molded by the same method as in Example 1.

Next, for an annealing step, the lens obtained was positioned on the lens supporting device shown in the lower drawing of Fig. 1 (with the lower lens surface and the supporting device in a state of non-contact). The lens supporting device was made of an aluminum alloy and the inner diameter of the concave lens receiving part was 63 to 70 Φ. The incline of the tapered surface of the lens-carrying part was 45° relative to horizontal. The lens, while thus supported, was annealed under conditions of 20°C to 115°C. Although the heating temperature range included the glass transition temperature (100°C) of the polyurethane constituting the lens, the lens obtained exhibited excellent lens physical properties, free of both optical distortion and deformation caused by the heat treatment.

### [Reference Example 3 (Reference Aspect A)]

Upper/lower glass lens molds (outer diameter 83.5 mm) were prepared to obtain a progressive dioptric power lens having a progressive surface on a convex surface (object side) and having astigmatic dioptric power on a concave surface (eyeball side) based on a prescription for a far dioptric power of -4.00 (D), astigmatic dioptric power of -1.00 (D), addition dioptric power of +1.00 (D), progressive band length of 14 mm indicating the distance between the far dioptric power measurement position and the addition dioptric power measurement position, outer lens diameter of 75 Φ, and center thickness of 0.8 mm. The lens molds were assembled with a tape-type resin gasket into a lens casting mold. A mixed monomer liquid identical to that in Example 1 was cast into the casting mold. The temperature was continuously raised from 25 to 120°C over 20 hours, and then maintained for 2 hours at 120°C to conduct polymerization. The tape was removed, a wedge was driven between the lower mold and the molded lens to separate the two, the upper mold was peeled away from the lens, and the lens was removed. The rim portion of the lens that had been removed was processed by cutting to reduce the outer diameter thereof from about 83.5 mm to 75 mm. In this process, the taper structure shown in the upper drawing of Fig. 1 was formed in the edge surface of the lens. This tapered shape was equivalent to the lateral surface of an imaginary cone having a vertex on a straight line in the direction of a normal line extending from the geometric center of the lens, with the angle formed with the normal line direction extending from the geometric center of the lens being 5°. The angle of the tapered shape widened in the direction in which the concave side of the lens (eyeball side) widened, with the vertex of the imaginary cone being positioned on the convex surface side (object side) of the lens.

Next, for an annealing step, the lens obtained was positioned on the lens supporting device shown in the upper drawing of Fig. 1. The lens supporting device was made of an aluminum alloy and the inner diameter of the concave lens receiving part was 72 to 80 Φ. The incline of the tapered surface of the lens-carrying part was 85° relative to horizontal. The lens, while thus supported, was annealed under conditions of 20°C to 115°C. The lens obtained exhibited good lens physical properties, free of both optical distortion and deformation caused by the heat treatment.

### [Reference Example 4 (Reference Aspect A)]

One or both surfaces of a lens base material were cut with a curve generator to obtain a monofocal dioptric power lens in which astigmatic dioptric power was distributed between a concave surface and a convex surface based on a prescription for an average dioptric power of -4.00 (D), astigmatic dioptric power of -1.00 (D), lens outer diameter of 80 Φ, and a center thickness of 1.0 mm. When just one surface was cut, a semifinished lens (outer diameter 83.5 mm) having a premolded optical surface on just one surface was employed. After creating an optical surface, the outer diameter of the lens rim portion was cut from about 83.5 mm to 80 mm. In that process, the taper structure shown in the upper drawing of Fig. 1 was formed on the edge surface of the lens. This tapered shape was equivalent to the lateral surface of an imaginary cone having a vertex on a straight line in the direction of a normal line extending from the geometric center of the lens, with the angle formed with the normal line direction extending from the geometric center of the lens being 5°. The angle of the tapered shape widened in the direction in which the concave side of the lens (eyeball side) widened, with the vertex of the imaginary cone being positioned on the convex surface side (object side) of the lens.

For an annealing step, the lens obtained was positioned on the lens supporting device shown in the upper drawing of Fig. 1 (with the convex portion of the lower lens surface in contact with the supporting device). The lens supporting device was made of an aluminum alloy and the inner diameter of the concave lens receiving part was 79 to 81 Φ. The incline of the tapered surface of the lens-carrying part was 85° relative to horizontal. The lens, while thus supported, was annealed under conditions of 20°C to 115°C. The remaining conditions were identical to those in Reference Example 3. The lens obtained exhibited good lens physical properties, free of both optical distortion and deformation caused by the heat treatment.

### [Reference Example 5 (Reference Aspect A)]

To a container made of glass and equipped with magnetic stirrer were charged 142 mass parts of γ-glycidoxypropylmethoxysilane and the mixture was stirred. To this were then added in dropwise fashion 1.4 mass parts of 0.01 normal hydrochloric acid and 32 mass parts of water. Following the dropwise addition, the mixture was stirred for 24 hours, yielding a γ-glycidoxypropyltrimethoxysilane hydrolysis product. Next, 460 mass parts of a complex sol of stannic oxide - zirconium oxide (methanol dispersion, total metal oxide 31.5 mass percent, average particle diameter 10 to 15 millimicrons), 300 mass parts of ethyl cellosolve, 0.7 mass part of a lubricant in the form of silicone surfactant, and 8 mass parts of a curing agent in the form of aluminum acetylacetonate were added to the above γ-glycidoxypropyltrimethoxysilane hydrolysis product. The mixture was thoroughly stirred and then filtered to prepare a coating liquid. A plastic lens (the polyurethane lens obtained in Reference Example 1) that had been processed with an alkali aqueous solution was thoroughly cleaned and then immersed in the coating liquid, and the coating liquid was coated on the convex surface of the lens by dipping (at a lifting rate of 14 cm/minute).

After having completed the immersion, the plastic lens was positioned on the lens supporting device shown in the lower drawing of Fig. 1 (with the lower lens surface and the supporting device in a state of non-contact) and heated for 2 hours at 130°C to form a cured film (hardcoat film). Since a certain amount of deformation and distortion due to heating by curing were observed on the lens following formation of the hardcoat film, the lens was positioned again on the same lens supporting device and annealed for 2 hours at 80 °C to 120°C. The lens obtained exhibited excellent lens physical properties; the optical distortion and deformation had been eliminated.

Reference Aspect A is suitable as a method of manufacturing plastic lenses required to exhibit a high degree of optical characteristics, particularly eyeglass lenses.

### BRIEF DESCRIPTION OF THE DRAWINGS

[Fig. 1] It shows an example of a plastic lens, having a tapered surface on its edge surface, mounted on a lens support member.
[Fig. 2] It is a distribution diagram of S degrees (average degrees) in a progressive multifocal lens.
[Fig. 3] It is a distribution diagram of C degrees (cylinder degrees) in a progressive multifocal lens.
[Fig. 4] It is a top view corresponding to the S degree distribution in Fig. 2.
[Fig. 5] It is a top view corresponding to the C degree distribution in Fig. 3.
[Fig. 6a] It is a drawing showing the cross-section of a progressive dioptric power plastic lens.
[Fig. 6b] It is a drawing showing the cross-section of a progressive dioptric power plastic lens.

## Claims

1. A method of manufacturing a plastic lens comprising a cured film on at least one of a pair of opposing surfaces of a plastic lens substrate comprising:
heating the plastic lens substrate to a temperature greater than or equal to a glass transition temperature of the substrate;
coating a photocurable composition on at least one of a pair of opposing surfaces of the lens substrate following the heating;
forming a cured film by irradiating the photocurable composition that has been coated on the substrate with light to cure at least a portion of the composition; and
conducting a heat treatment of the plastic lens on which the cured film has been formed at a temperature, the temperature being lower than the glass transition temperature of the substrate but greater than or equal to a glass transition temperature of the cured film.

2. The method of manufacturing according to claim 1, wherein the photocurable composition is a photochromic liquid comprising a photochromic dye and a photocurable component, and the cured film is a photochromic film.

3. The method of manufacturing according to claim 1 or 2, wherein the photocurable composition further comprises a photo-induced radical polymerization initiator.

4. The method of manufacturing according to any of claims 1 to 3, wherein the cured film has a thickness ranging from 10 to 60 µm.

5. The method of manufacturing according to any of claims 1 to 4, wherein the heating of the plastic lens substrate and/or the heat treatment are conducted while supporting, with a support member, an edge surface of the plastic lens substrate positioned with one of the opposing surfaces facing downward, and the edge surface of the plastic lens substrate comprises a tapered surface with a reverse-tapered shape with respect to the surface positioned facing downward.

6. The method of manufacturing according to claim 5, wherein the tapered surface forms a part of a lateral surface of a cone sharing a common vertex.

7. The method of manufacturing according to claim 5 or 6, wherein the supporting is conducted in a state where the surface positioned facing downward does not contact the support member.

8. The method of manufacturing according to any of claims 5 to 7, wherein
among the pair of opposing surfaces, one is an optical surface and the other is a non-optical surface, and
the surface positioned facing downward is the optical surface.

9. The method of manufacturing according to any of claims 5 to 8, wherein the surface positioned facing downward comprises a progressive surface or an aspherical surface comprising a progressive element.

10. The method of manufacturing according to any of claims 5 to 9, wherein
among the pair of opposing surfaces, one is a convex surface and the other is a concave surface, and
the surface positioned facing downward is the convex surface.

11. The method of manufacturing according to any of claims 1 to 10, wherein both of the pair of opposing surfaces have a noncentrosymmetric surface shape.

12. The method of manufacturing according to any of claims 5 to 11, wherein the support member is a ring-shaped member having on its inner circumference a surface into which the edge surface of the plastic lens fits, and the supporting is conducted by fitting the edge surface of the plastic lens into the surface.

13. The method of manufacturing according to any of claims 5 to 12, wherein the supporting is conducted in the heat treatment, and the surface on which the cured film is comprised is positioned facing downward during the supporting.

14. The method of manufacturing according to any of claims 1 to 13, wherein the photocurable composition comprises a coupling agent, and prior to coating of the photocurable composition, a surface of the plastic lens substrate to be coated with the composition is subjected to at least one surface treatment selected from the group consisting of a surface cleaning treatment, a surface activation treatment, a surface area increasing treatment, and a surface coating application treatment.

15. The method of manufacturing according to claim 14, wherein the surface treatment comprises at least one selected from the group consisting of alkali treatment, polishing treatment, exposure to ozone, corona discharge, irradiation with ultraviolet radiation, plasma discharge, coating of a primer layer, and solvent treatment.

## Patentansprüche

1. Herstellungsverfahren für eine Kunststofflinse, die einen gehärteten Film auf wenigstens einer eines Paars von gegenüberliegenden Oberflächen eines Kunststofflinsensubstrates umfasst, umfassend:
Erwärmen des Kunststofflinsensubstrates auf eine Temperatur, die höher als oder gleich der Glasübergangstemperatur des Substrates ist;
Auftragen einer photohärtbaren Zusammensetzung auf wenigstens eine eines Paares gegenüberliegender Oberflächen des Linsensubstrates nach dem Erwärmen;
Bilden eines gehärteten Films durch Bestrahlen der photohärtbaren Zusammensetzung, die auf das Substrat aufgetragen worden ist, mit Licht, um wenigstens einen Teil der Zusammensetzung zu härten, und
Durchführen einer Wärmebehandlung an der Kunststofflinse, auf welcher der gehärtete Film gebildet wurde, bei einer Temperatur, wobei die Temperatur niedriger ist als die Glasübergangstemperatur des Substrates, aber höher als die oder gleich der Glasübergangstemperatur des gehärteten Films ist.

2. Herstellungsverfahren gemäß Anspruch 1, wobei die photohärtbare Zusammensetzung eine photochrome Flüssigkeit ist, die einen photochromen Farbstoff und eine photohärtbare Komponente umfasst, und der gehärtete Film ein photochromer Film ist.

3. Herstellungsverfahren gemäß Anspruch 1 oder 2, wobei die photohärtbare Zusammensetzung außerdem einen photoinduzierten radikalischen Polymerisationsinitiator umfasst.

4. Herstellungsverfahren gemäß einem der Ansprüche 1 bis 3, wobei der gehärtete Film eine Dicke im Bereich von 10 bis 60 µm hat.

5. Herstellungsverfahren gemäß einem der Ansprüche 1 bis 4, wobei das Erwärmen des Kunststofflinsensubstrates und/oder die Wärmebehandlung durchgeführt werden, während eine Randoberfläche des Kunststofflinsensubstrats, das mit einer der gegenüberliegenden Oberflächen nach unten gerichtet positioniert ist, mit einem Trägerelement getragen wird, und wobei die Randoberfläche des Kunststofflinsensubstrates eine konisch zulaufende Oberfläche umfasst, und zwar mit einer umgekehrt konisch zulaufenden Form bezüglich der Oberfläche, die nach unten gerichtet positioniert ist.

6. Herstellungsverfahren gemäß Anspruch 5, wobei die konisch zulaufende Oberfläche einen Teil einer lateralen Oberfläche eines Konus bildet, die eine gemeinsame Spitze teilen.

7. Herstellungsverfahren gemäß Anspruch 5 oder 6, wobei das Tragen in einem Zustand durchgeführt wird, indem die Oberfläche, die nach unten gerichtet positioniert ist, nicht mit dem Trägerelement in Kontakt kommt.

8. Herstellungsverfahren gemäß einem der Ansprüche 5 bis 7, wobei
von dem Paar gegenüberliegender Oberflächen eine eine optische Oberfläche ist und die andere eine nicht-optische Oberfläche ist und
die Oberfläche, die nach unten gerichtet positioniert ist, die optische Oberfläche ist.

9. Herstellungsverfahren gemäß einem der Ansprüche 5 bis 8, wobei die Oberfläche, die nach unten gerichtet positioniert
ist, eine Progressivoberfläche oder eine asphärische Oberfläche, die ein Progressivelement umfasst, umfasst.

10. Herstellungsverfahren gemäß einem der Ansprüche 5 bis 9, wobei
von dem Paar gegenüberliegender Oberflächen eine eine konvexe Oberfläche ist und die andere eine konkave Oberfläche ist und die Oberfläche, die nach unten gerichtet positioniert ist, die konvexe Oberfläche ist.

11. Herstellungsverfahren gemäß einem der Ansprüche 1 bis 10, wobei beide des Paars gegenüberliegender Oberflächen eine nicht-zentrosymmetrische Oberflächenform haben.

12. Herstellungsverfahren gemäß einem der Ansprüche 5 bis 11, wobei das Trägerelement ein ringförmiges Element ist, das an seinem inneren Umfang eine Oberfläche hat, in die eine Randoberfläche der Kunststofflinse passt, und das Tragen durchgeführt wird, indem die Randoberfläche der Kunststofflinse in die Oberfläche eingepasst wird.

13. Herstellungsverfahren gemäß einem der Ansprüche 5 bis 12, wobei das Tragen in der Wärmebehandlung durchgeführt wird und die Oberfläche, auf welcher der gehärtete Film ist, während des Tragens nach unten gerichtet positioniert ist.

14. Herstellungsverfahren gemäß einem der Ansprüche 1 bis 13, wobei die photohärtbare Zusammensetzung ein Kupplungsmittel umfasst und wobei vor Auftragen der photohärtbaren Zusammensetzung eine Oberfläche des Kunststofflinsensubstrates, die mit der Zusammensetzung beschichtet werden soll, wenigstens einer Oberflächenbehandlung unterzogen wird, die ausgewählt ist aus der Gruppe, bestehend aus einer Oberflächenreinigungsbehandlung, einer Oberflächenaktivierungsbehandlung, einer den Oberflächenbereich erhöhenden Behandlung und einer Oberflächenbeschichtungsauftragungsbehandlung.

15. Herstellungsverfahren gemäß Anspruch 14, wobei die Oberflächenbehandlung wenigstens eine umfasst, die ausgewählt ist aus der Gruppe, bestehend aus Alkalibehandlung, Polierbehandlung, Exposition gegenüber Ozon, Koronaentladung, Bestrählung mit ultravioletter Strahlung, Plasmaentladung, Auftragung einer Grundierungsschicht und Lösungsmittelbehandlung.

## Revendications

1. Procédé de fabrication d'une lentille en plastique comprenant un film durci sur au moins une paire de surfaces opposées d'un substrat de lentille en plastique consistant à :
chauffer le substrat de lentille en plastique à une température supérieure ou égale à une température de transition vitreuse du substrat ;
revêtir une composition photodurcissable sur au moins une d'une paire de surfaces opposées du substrat de lentille après chauffage ;
former un film durci par irradiation de la composition photodurcissable qui a été revêtue sur le substrat avec une lumière pour durcir au moins une partie de la composition ; et
réaliser un traitement thermique de la lentille en plastique sur laquelle le film durci a été formé à une température, la température étant inférieure à la température de transition vitreuse du substrat, mais supérieure ou égale à la température de transition vitreuse du film durci.

2. Procédé de fabrication selon la revendication 1, dans lequel la composition photodurcissable est un liquide photochrome comprenant un colorant photochrome et un composant photodurcissable, et le film durci est un film photochrome.

3. Procédé de fabrication selon la revendication 1 ou 2, dans lequel la composition photodurcissable comprend en outre un initiateur de polymérisation radicalaire photo-induit.

4. Procédé de fabrication selon l'une quelconque des revendications 1 à 3, dans lequel le film durci a une épaisseur comprise dans la plage allant de 10 à 60 µm.

5. Procédé de fabrication selon l'une quelconque des revendications 1 à 4, dans lequel le chauffage du substrat de lentille en plastique et/ou le traitement thermique sont réalisés tout en supportant, avec un élément de support, une surface de bord du substrat de lentille en plastique positionné avec l'une des surfaces opposées orientée vers le bas, et la surface de bord du substrat de lentille en plastique comprend une surface galbée avec une forme galbée en sens inverse par rapport à la surface positionnée avec une orientation vers le bas.

6. Procédé de fabrication selon la revendication 5, dans lequel la surface galbée forme une partie d'une surface latérale d'un cône partageant un vertex commun.

7. Procédé de fabrication selon la revendication 5 ou 6, dans lequel le support est réalisé dans un état dans lequel la surface positionnée avec une orientation vers le bas n'est pas en contact avec l'élément de support.

8. Procédé de fabrication selon l'une quelconque des revendications 5 à 7, dans lequel
parmi la paire de surfaces opposées, une est une surface optique et l'autre est une surface non optique, et
la surface positionnée avec une orientation vers le bas est la surface optique.

9. Procédé de fabrication selon l'une quelconque des revendications 5 à 8, dans lequel la surface positionnée avec une orientation vers le bas comprend une surface progressive ou une surface asphérique comprenant un élément progressif.

10. Procédé de fabrication selon l'une quelconque des revendications 5 à 9, dans lequel
parmi la paire de surfaces opposées, une est une surface convexe et l'autre est une surface concave, et
la surface positionnée avec une orientation vers le bas est la surface convexe.

11. Procédé de fabrication selon l'une quelconque des revendications 1 à 10, dans lequel les deux de la paire de surfaces opposées ont une forme de surface non centrosymétrique.

12. Procédé de fabrication selon l'une quelconque des revendications 5 à 11, dans lequel l'élément de support est un élément en forme de cercle ayant sur sa circonférence interne une surface à l'intérieure de laquelle la surface de bord de la lentille en plastique s'adapte et le support est réalisé par adaptation de la surface de bord de la lentille en plastique à l'intérieur de la surface.

13. Procédé de fabrication selon l'une quelconque des revendications 5 à 12, dans lequel le support est réalisé lors du traitement thermique et la surface sur laquelle le film durci est inclùs est positionnée avec une orientation vers le bas pendant le support.

14. Procédé de fabrication selon l'une quelconque des revendications 1 à 13, dans lequel la composition photodurcissable comprend un agent de couplage et avant le revêtement de la composition photodurcissable, une surface du substrat de lentille en plastique à revêtir avec la composition est soumise à au moins un traitement de surface choisi dans le groupe constitué par un traitement de nettoyage de surface, un traitement d'activation de surface, un traitement d'augmentation de la surface et un traitement d'application d'un revêtement sur la surface.

15. Procédé de fabrication selon la revendication 14, dans lequel le traitement de surface comprend au moins un traitement choisi dans le groupe constitué par un traitement alcalin, un traitement de polissage, une exposition à de l'ozone, une décharge par effet couronne, une irradiation par rayonnement d'ultraviolets, une décharge de plasma, un revêtement d'une couche primaire et un traitement avec un solvant.
